# EUROPEAN PATENT SPECIFICATION

(11) **EP 1 763 774 B1**
(45) Date of publication and mention of the grant of the patent: **05.12.2012**
(21) Application number: 05733669.5
(22) Date of filing: 22.04.2005
(51) Int. Cl.: G06F 9/52, G06F 12/02

(54) **MULTIPLE COMPUTER ARCHITECTURE WITH REPLICATED MEMORY FIELDS**
MEHRFACH-COMPUTERARCHITEKTUR MIT DUPLIZIERTEN SPEICHERFELDERN
ARCHITECTURE A MULTIPLES ORDINATEURS AVEC DES CHAMPS DE MEMOIRE DUPLIQUES

(30) Priority: 22.04.2004 AU 2004902146
(43) Date of publication of application: 21.03.2007
(73) Proprietor: Waratek Pty Limited, Lindfield, NSW 2070 (AU)
(72) Inventor: HOLT, John Matthew, Dublin 2 (IE)
(74) Representative: Beresford, Keith Denis Lewis
(86) International application number: PCT/AU2005/000582
(87) International publication number: WO 2005/103928

(56) References cited:
- WO-A-95/08809
- WO-A-03/084116
- WO-A2-02/44835
- WO-A2-03/083614
- US-A- 5 488 723
- US-A1- 2004 073 828
- US-B1- 6 324 587
- US-B1- 6 625 751
- BRESSOUD T.C. ET AL: 'TFT: A Software System for Application-Transparent Fault Tolerance.' THE TWENTY-EIGHTH ANNUAL INTERNATIONAL SYMPOSIUM ON FAULT-TOLERANT COMPUTING. 1998, pages 128 - 137, XP010291312

## Description

### Field of the Invention

The present invention relates to computers and, in particular, to a modified machine architecture which enables improved performance to be achieved.

### Background Art

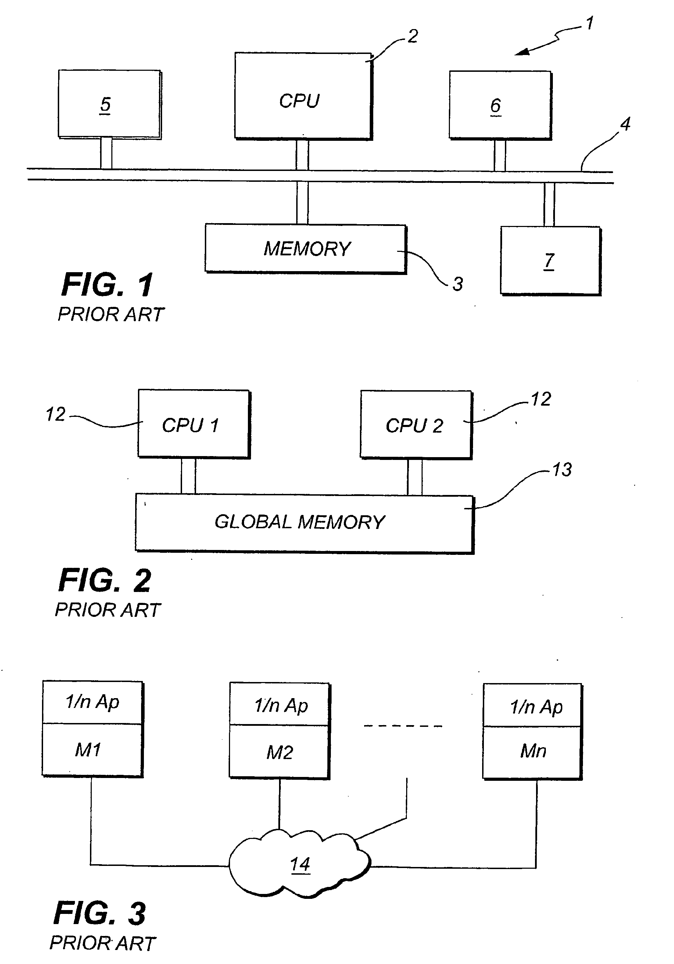

Ever since the advent of computers, and computing, software for computers has been written to be operated upon a single machine. As indicated in Fig. 1, that single prior art machine 1 is made up from a central processing unit, or CPU, 2 which is connected to a memory 3 via a bus 4. Also connected to the bus 4 are various other functional units of the single machine 1 such as a screen 5, keyboard 6 and mouse 7.

A fundamental limit to the performance of the machine 1 is that the data to be manipulated by the CPU 2, and the results of those manipulations, must be moved by the bus 4. The bus 4 suffers from a number of problems including so called bus "queues" formed by units wishing to gain an access to the bus, contention problems, and the like. These problems can, to some extent, be alleviated by various stratagems including cache memory, however, such stratagems invariably increase the administrative overhead of the machine 1.

Naturally, over the years various attempts have been made to increase machine performance. One approach is to use symmetric multi-processors. This prior art approach has been used in so called "super" computers and is schematically indicated in Fig. 2. Here a plurality of CPU's 12 are connected to global memory 13. Again, a bottleneck arises in the communications between the CPU's 12 and the memory 13. This process has been termed "Single System Image". There is only one application and one whole copy of the memory for the application which is distributed over the global memory. The single application can read from and write to, (ie share) any memory location completely transparently.

Where there are a number of such machines interconnected via a network, this is achieved by taking the single application written for a single machine and partitioning the required memory resources into parts. These parts are then distributed across a number of computers to form the global memory 13 accessible by all CPU's 12. This procedure relies on masking, or hiding, the memory partition from the single running application program. The performance degrades when one CPU on one machine must access (via a network) a memory location physically located in a different machine.

Although super computers have been technically successful in achieving high computational rates, they are not commercially successful in that their inherent complexity makes them extremely expensive not only to manufacture but to administer. In particular, the single system image concept has never been able to scale over "commodity" (or mass produced) computers and networks. In particular, the Single System Image concept has only found practical application on very fast (and hence very expensive) computers interconnected by very fast (and similarly expensive) networks.

A further possibility of increased computer power through the use of a plural number of machines arises from the prior art concept of distributed computing which is schematically illustrated in Fig. 3. In this known arrangement, a single application program (Ap) is partitioned by its author (or another programmer who has become familiar with the application program) into various discrete tasks so as to run upon, say, three machines in which case n in Fig. 3 is the integer 3. The intention here is that each of the machines M1...M3 runs a different third of the entire application and the intention is that the loads applied to the various machines be approximately equal. The machines communicate via a network 14 which can be provided in various forms such as a communications link, the internet, intranets, local area networks, and the like. Typically the speed of operation of such networks 14 is an order of magnitude slower than the speed of operation of the bus 4 in each of the individual machines M1, M2, etc.

Distributed computing suffers from a number of disadvantages. Firstly, it is a difficult job to partition the application and this must be done manually. Secondly, communicating data, partial results, results and the like over the network 14 is an administrative overhead. Thirdly, the need for partitioning makes it extremely difficult to scale upwardly by utilising more machines since the application having been partitioned into, say three, does not run well upon four machines. Fourthly, in the event that one of the machines should become disabled, the overall performance of the entire system is substantially degraded.

WO95/08809 (Oracle) discloses a system for data replication in a multiple computer system used for logging sales orders and inventory control. Sales orders input at different computers must be replicated at all other computers so that each computer maintains an accurate record of the current inventory (quantity on hand or "qoh"). A complicated system including a storing of both old and new data is disclosed for this data replication. A check is made to determine whether there is any discrepancy in the inventory count in two different computers. One way of determining this is to determine whether the order could be filled based on the Quantity on Hand information in both databases. The executing application program was initially written to operate on at least two computers. The local memory (database) of each computer is accessible by the application program executing on another computer.

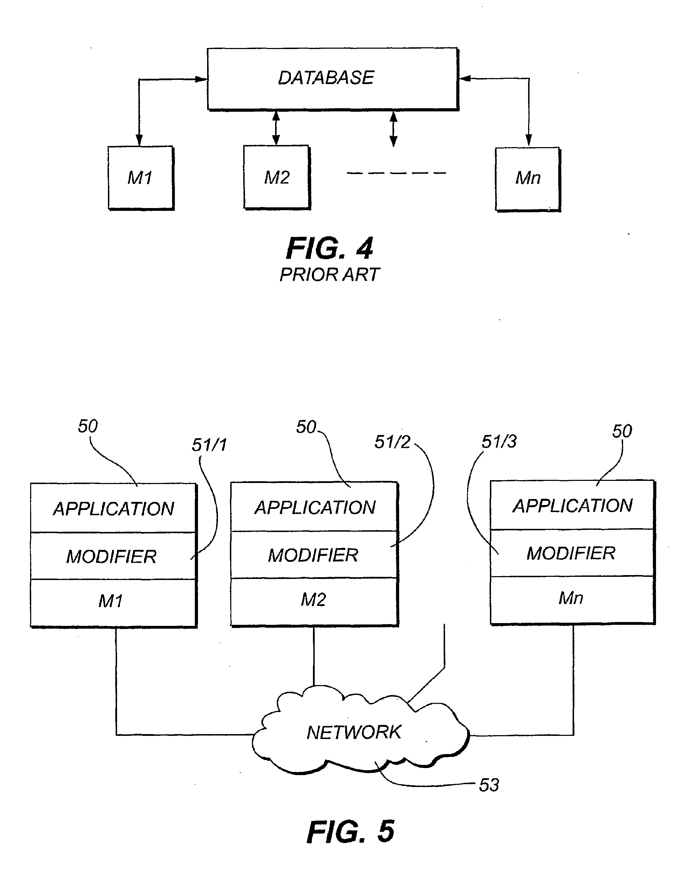

A further prior art arrangement is known as network computing via "clusters" as is schematically illustrated in Fig. 4. In this approach, the entire application is loaded onto each of the machines M1, M2 ....Mn. Each machine communicates with a common database but does not communicate directly with the other machines. Although each machine runs the same application, each machine is doing a different "job" and uses only its own memory. This is somewhat analogous to a number of windows each of which sell train tickets to the public. This approach does operate, is scalable and mainly suffers from the disadvantage that it is difficult to administer the network.

### Summary of the Invention

The present invention is intended to provide a method of operating contemporaneously on a plurality of computers and a modified machine architecture which goes some way towards overcoming, or at least ameliorating, some of the abovementioned disadvantages.

In accordance with the present invention there is provided a method of executing individual threads of an application program at the same time on a plurality of computers all interconnected via a communications link, wherein said application program is an application program written to operate only on a single computer, said method comprising the following steps of:
(i) creating, in a local memory of each said computer, similar memory locations, e.g. classes &/or fields, the local memory of each said computer being accessible only by those individual threads of said application program executing on that computer, and configuring each said computer to read memory locations only from its corresponding local memory and no other computer,
(ii) loading the individual threads of the application program on said computers,
(iii) identifying before loading, or during loading, or after loading but before execution, executable actions which write to memory,
(iv) modifying the application program to distribute the content of any written to memory location that is to be updated by one of said computers in carrying out an identified executable writing action,
(v) sharing execution of said individual threads of the application program between said computers, and
(vi) distributing the content of any written to memory location that is updated by one of said computers in carrying out an identified executable writing action, to other ones of said computers via said communications link.

Further preferred aspects of the method are claimed in the sub-claims.

In accordance with the present invention there is also provided a multiple computer system having a plurality of computers all interconnected via a communications link on which individual threads of an application program are executed at the same time, wherein
(i) said application program is an application program written to operate only on a single computer,
(ii) each of said computers has a local memory in each of which similar memory locations, e.g. classes &/or fields, are created, the local memory of each said computer is accessible only by those individual threads of said application program executing on that computer, and each said computer is configured to read memory locations only from its corresponding local memory and from no other computer,
(iii) the individual threads of the application program are loaded on said computers,
(iv) executable actions of said application program which write to memory, are identified before loading, or during loading, or after loading but before execution,
(v) the program is modified to distribute the content of any written to memory location that is to be updated by one of said computers in carrying out an identified executable writing action,
(vi) execution of said individual threads of the application program is shared between said computers, and
(vii) the content of any written to memory location that is updated by one of said computers in carrying out an identified executable writing action, is distributed to other ones of said computers via said communications link.

Further preferred aspects of the invention are claimed in the sub-claims.

The present invention also provides a computer program product incorporating instructions which enable the method of the present invention to be carried out

### Brief Description of the Drawings

Embodiments of the present invention will now be described with reference to the drawings in which:
Fig. **1** is a schematic view of the internal architecture of a conventional computer,
Fig. 2 is a schematic illustration showing the internal architecture of known symmetric multiple processors,
Fig. 3 is a schematic representation of prior art distributed computing,
Fig. 4 is a schematic representation of a prior art network computing using clusters,
Fig. 5 is a schematic block diagram of a plurality of machines operating the same application program in accordance with a first embodiment of the present invention,
Fig. 6 is a schematic illustration of a prior art computer arranged to operate JAVA code and thereby constitute a JAVA virtual machine,
Fig. 7 is a drawing similar to Fig. 6 but illustrating the initial loading of code in accordance with the preferred embodiment,
Fig. 8 is a drawing similar to Fig. 5 but illustrating the interconnection of a plurality of computers each operating JAVA code in the manner illustrated in Fig. 7,
Fig. 9 is a flow chart of the procedure followed during loading of the same application on each machine in the network,
Fig. 10 is a flow chart showing a modified procedure similar to that of Fig. 9,
Fig. 11 is a schematic representation of multiple thread processing carried out on the machines of Fig. 8 utilizing a first embodiment of memory updating,
Fig. 12 is a schematic representation similar to Fig. 11 but illustrating an alternative embodiment,
Fig. 13 illustrates multi-thread memory updating for the computers of Fig. 8,
Fig. 14 is a schematic representation of two laptop computers interconnected to simultaneously run a plurality of applications, with both applications running on a single computer,
Fig. 15 is a view similar to Fig. 14 but showing the Fig. 14 apparatus with one application operating on each computer, and
Fig. 16 is a view similar to Figs. 14 and 15 but showing the Fig. 14 apparatus with both applications operating simultaneously on both computers.

The specification includes an Annexure which provides actual program fragments which implement various aspects of the described embodiments.

### Detailed Description

In connection with Fig. 5, in accordance with a preferred embodiment of the present invention a single application program 50 can be operated simultaneously on a number of machines M1, M2...Mn communicating via network 53. As it will become apparent hereafter, each of the machines M1, M2...Mn operates with the same application program 50 on each machine M1, M2...Mn and thus all of the machines M1, M2...Mn have the same application code and data 50. Similarly, each of the machines M1, M2...Mn operates with the same (or substantially the same) modifier 51 on each machine M1, M2...Mn and thus all of the machines M1, M2...Mn have the same (or substantially the same) modifier 51 with the modifier of machine M2 being designated 51/2. In addition, during the loading of, or preceding the execution of, the application 50 on each machine M1, M2...Mn, each application 50 has been modified by the corresponding modifier 51 according to the same rules (or substantially the same rules since minor optimising changes are permitted within each modifier 51/1...51/n).

As a consequence of the above described arrangement, if each of the machines M1, M2...Mn has, say, a shared memory capability of 10MB, then the total shared memory available to each application 50 is not, as one might expect, 10n MB but rather only 10MB. However, how this results in improved operation will become apparent hereafter. Naturally, each machine M1, M2...Mn has an unshared memory capability. The unshared memory capability of the machines M1, M2...Mn are normally approximately equal but need not be.

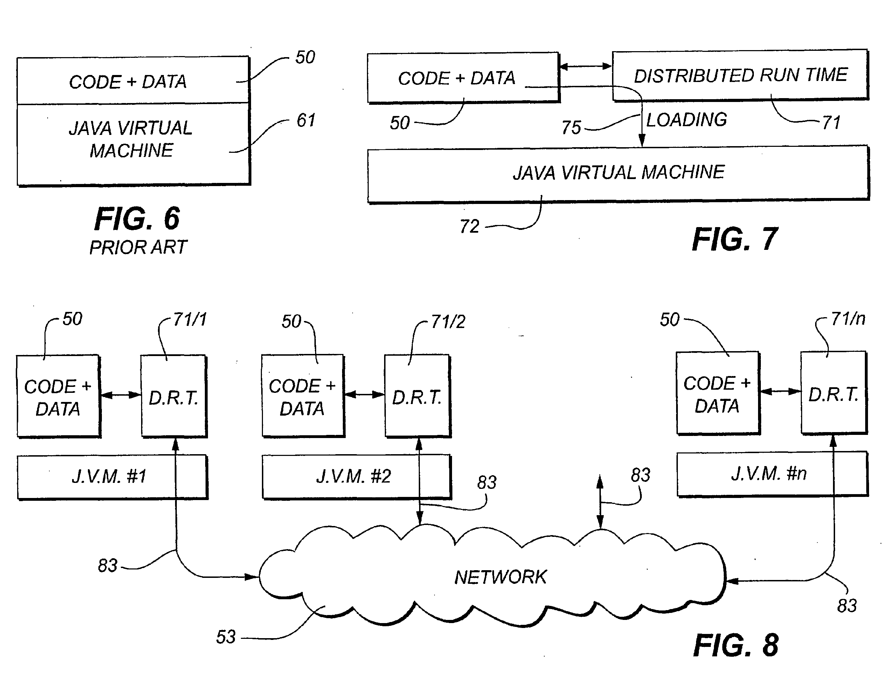

It is known from the prior art to operate a machine (produced by one of various manufacturers and having an operating system operating in one of various different languages) in a particular language of the application, by creating a virtual machine as schematically illustrated in Fig. 6. The prior art arrangement of Fig. 6 takes the form of the application 50 written in the Java language and executing within a Java Virtual Machine 61. Thus, where the intended language of the application is the language JAVA, a JAVA virtual machine is created which is able to operate code in JAVA irrespective of the machine manufacturer and internal details of the machine. For further details see "The JAVA Virtual Machine Specification" 2nd Edition by T. Lindholm & F. Yellin of Sun Microsystems Inc. of the USA.

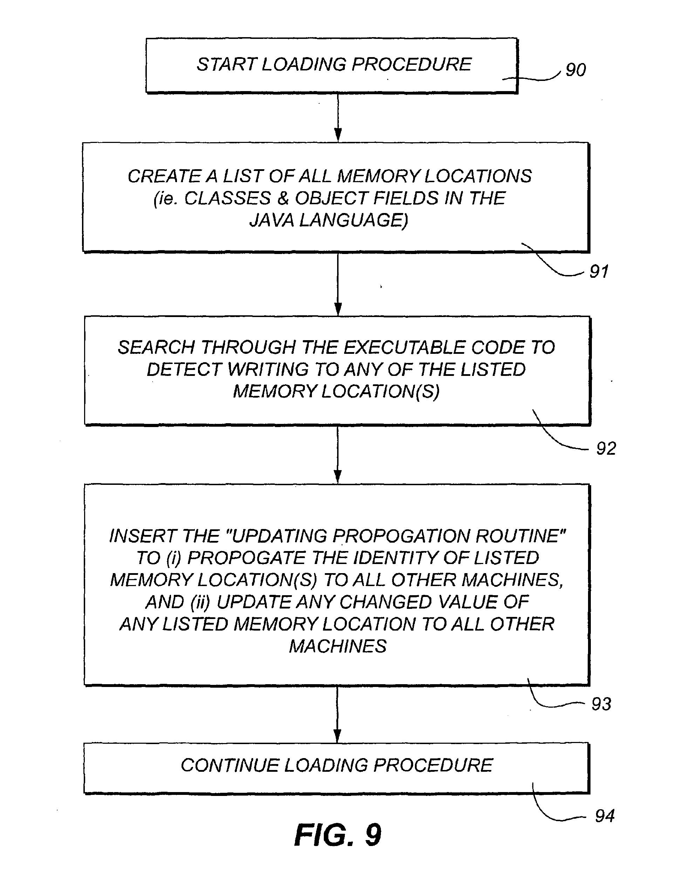

This well known prior art arrangement of Fig. 6 is modified in accordance with the preferred embodiment of the present invention by the provision of an additional facility which is conveniently termed "distributed run time" or DRT 71 as seen in Fig. 7. In Fig. 7, the application 50 is loaded onto the Java Virtual Machine 72 via the distributed runtime system 71 through the loading procedure indicated by arrow 75. A distributed run time system is available from the Open Software Foundation under the name of Distributed Computing Environment (DCE). In particular, the distributed runtime 71 comes into operation during the loading procedure indicated by arrow 75 of the JAVA application 50 so as to initially create the JAVA virtual machine 72. The sequence of operations during loading will be described hereafter in relation to Fig. 9.

Fig. 8 shows in modified form the arrangement of Fig. 5 utilising JAVA virtual machines, each as illustrated in Fig. 7. It will be apparent that again the same application 50 is loaded onto each machine M1, M2...Mn. However, the communications between each machine M1, M2...Mn, and indicated by arrows 83, although physically routed through the machine hardware, are controlled by the individual DRT's 71/1...71/n within each machine. Thus, in practice this may be conceptionalised as the DRT's 71/1...71/n communicating with each other via the network 73 rather than the machines M1, M2...Mn themselves.

Turning now to Figs. 7 and 9, during the loading procedure 75, the program 50 being loaded to create each JAVA virtual machine 72 is modified. This modification commences at 90 in Fig. 9 and involves the initial step 91 of detecting all memory locations (termed fields in JAVA - but equivalent terms are used in other languages) in the application 50 being loaded. Such memory locations need to be identified for subsequent processing at steps 92 and 93. The DRT 71 during the loading procedure 75 creates a list of all the memory locations thus identified, the JAVA fields being listed by object and class. Both volatile and synchronous fields are listed.

The next phase (designated 92 in Fig. 9) of the modification procedure is to search through the executable application code in order to locate every processing activity that manipulates or changes field values corresponding to the list generated at step 91 and thus writes to fields so the value at the corresponding memory location is changed. When such an operation (typically putstatic or putfield in the JAVA language) is detected which changes the field value, then an "updating propagation routine" is inserted by step 93 at this place in the program to ensure that all other machines are notified that the value of the field has changed. Thereafter, the loading procedure continues in a normal way as indicated by step 94 in Fig. 9.

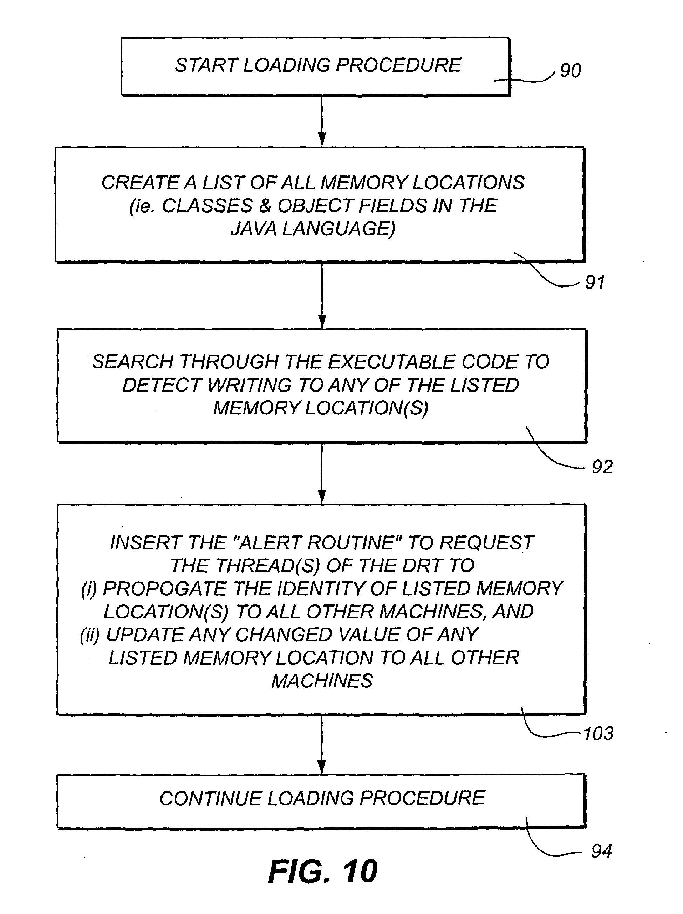

An alternative form of initial modification during loading is illustrated in Fig. 10. Here the start and listing steps 90 and 91 and the searching step 92 are the same as in Fig. 9. However, rather than insert the "updating propagation routine" as in step 93 in which the processing thread carries out the updating, instead an "alert routine" is inserted at step 103. The "alert routine" instructs a thread or threads not used in processing and allocated to the DRT, to carry out the necessary propagation. This step 103 is a quicker alternative which results in lower overhead.

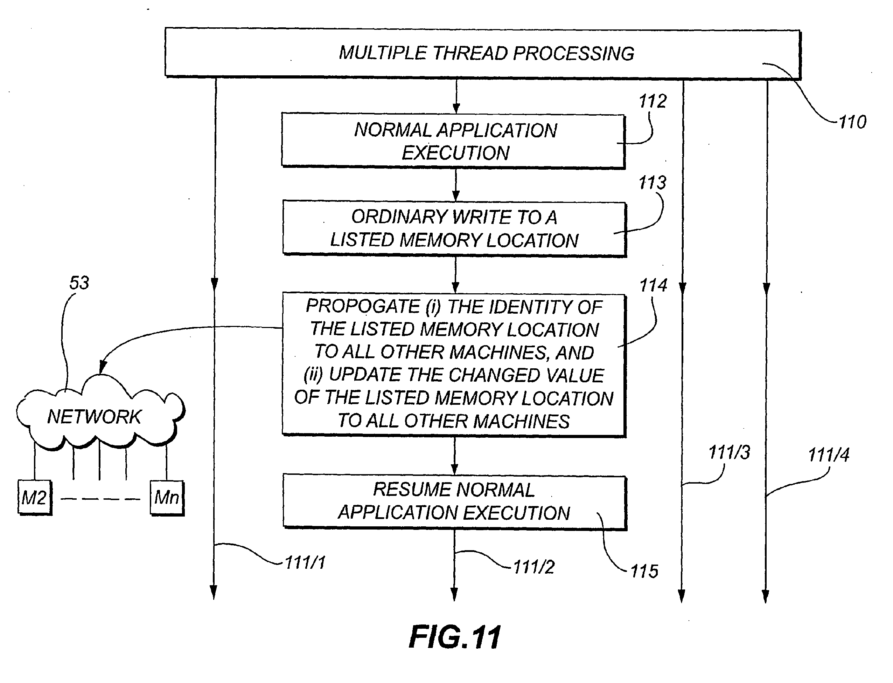

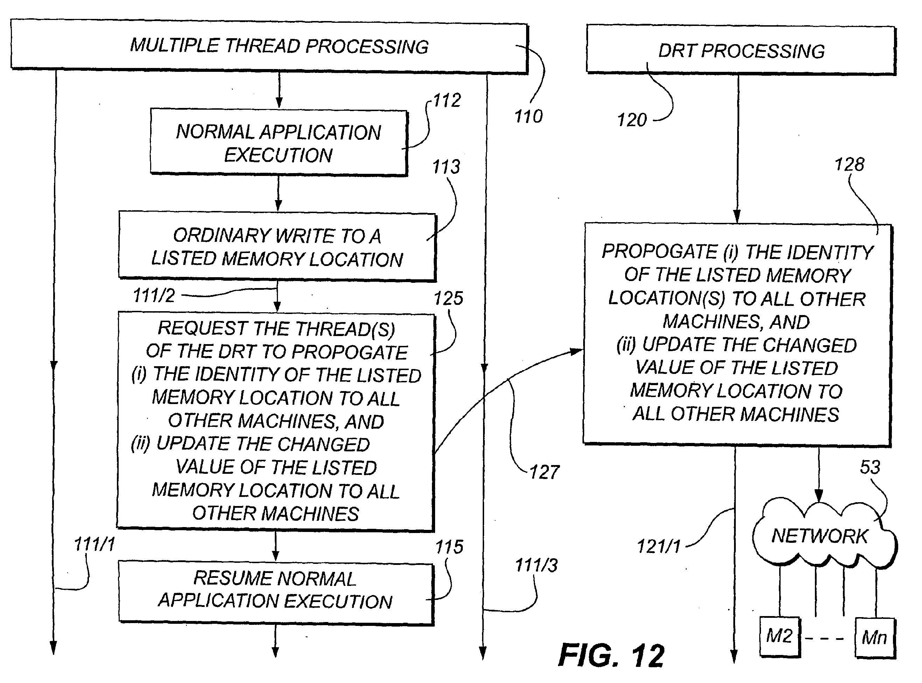

Once this initial modification during the loading procedure has taken place, then either one of the multiple thread processing operations illustrated in Figs. 11 and 12 takes place. As seen in Fig. 11, multiple thread processing 110 on the machines consisting of threads 111/1...111/4 is occurring and the processing of the second thread 111/2 (in this example) results in that thread 111/2 becoming aware at step 113 of a change of field value. At this stage the normal processing of that thread 111/2 is halted at step 114, and the same thread 111/2 notifies all other machines M2...Mn via the network 53 of the identity of the changed field and the changed value which occurred at step 113. At the end of that communication procedure, the thread 111/2 then resumes the processing at step 115 until the next instance where there is a change of field value.

In the alternative arrangement illustrated in Fig. 12, once a thread 121/2 has become aware of a change of field value at step 113, it instructs DRT processing 120 (as indicated by step 125 and arrow 127) that another thread(s) 121/1 allocated to the DRT processing 120 is to propagate in accordance with step 128 via the network 53 to all other machines M2 ... Mn the identity of the changed field and the changed value detected at step 113. This is an operation which can be carried out quickly and thus the processing of the initial thread 111/2 is only interrupted momentarily as indicated in step 125 before the thread 111/2 resumes processing in step 115. The other thread 121/1 which has been notified of the change (as indicated by arrow 127) then communicates that change as indicated in step 128 via the network 53 to each of the other machines M2 ... Mn.

This second arrangement of Fig. 12 makes better utilisation of the processing power of the various threads 111/1...111/3 and 121/1 (which are not, in general, subject to equal demands) and gives better scaling with increasing size of "n", (n being an integer greater than or equal to 2 which represents the total number of machines which are connected to the network 53 and which run the application program 50 simultaneously). Irrespective of which arrangement is used, the changed field and identities and values detected at step 113 are propagated to all the other machines M2...Mn on the network.

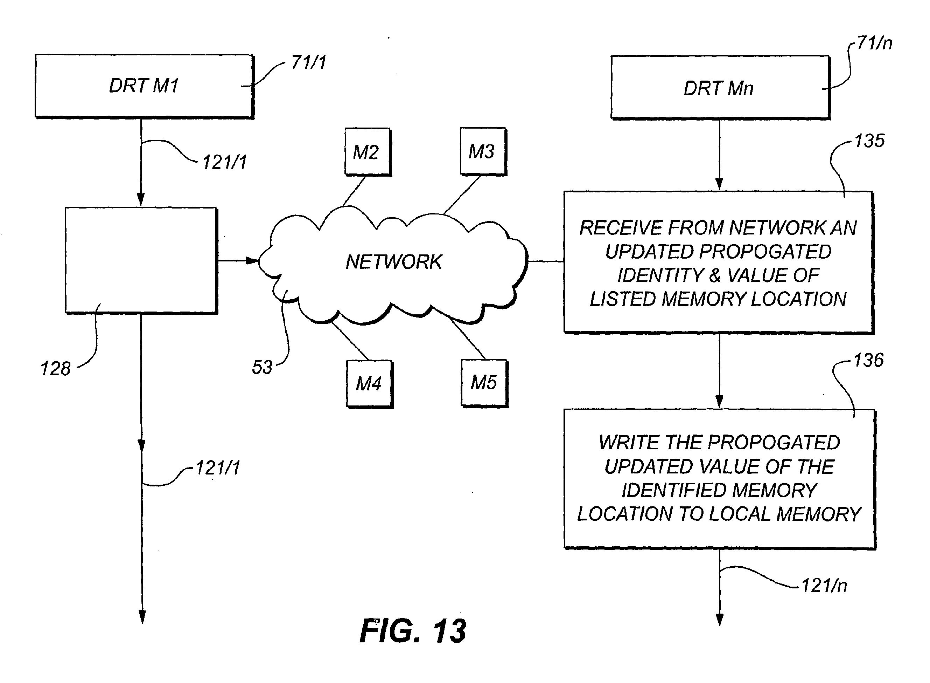

This is illustrated in Fig. 13 where the DRT 71/1 and its thread 121/1 of Fig. 12 (represented by step 128 in Fig. 13) sends via the network 53 the identity and changed value of the listed memory location generated at step 113 of Fig. 12 by processing in machine M1, to each of the other machines M2... Mn.

Each of the other machines M2...Mn carries out the action indicated by steps 135 and 136 in Fig. 13 for machine Mn by receiving the identity and value pair from the network 53 and writing the new value into the local corresponding memory location.

In the prior art arrangement in Fig. 3 utilising distributed software, memory accesses from one machine's software to memory physically located on another machine are permitted by the network interconnecting the machines. However, such memory accesses can result in delays in processing of the order of 10⁶-10⁷ cycles of the central processing unit of the machine. This in large part accounts for the diminished performance of the multiple interconnected machines.

However, in the present arrangement as described above in connection with Fig. 8, it will be appreciated that all reading of data is satisfied locally because the current value of all fields is stored on the machine carrying out the processing which generates the demand to read memory. Such local processing can be satisfied within 10²-10³ cycles of the central processing unit. Thus, in practice, there is substantially no waiting for memory accesses which involves reads.

However, most application software reads memory frequently but writes to memory relatively infrequently. As a consequence, the rate at which memory is being written or re-written is relatively slow compared to the rate at which memory is being read. Because of this slow demand for writing or re-writing of memory, the fields can be continually updated at a relatively low speed via the inexpensive commodity network 53, yet this low speed is sufficient to meet the application program's demand for writing to memory. The result is that the performance of the Fig. 8 arrangement is vastly superior to that of Fig. 3.

In a further modification in relation to the above, the identities and values of changed fields can be grouped into batches so as to further reduce the demands on the communication speed of the network 53 interconnecting the various machines.

It will also be apparent to those skilled in the art that in a table created by each DRT 71 when initially recording the fields, for each field there is a name or identity which is common throughout the network and which the network recognises. However, in the individual machines the memory location corresponding to a given named field will vary over time since each machine will progressively store changed field values at different locations according to its own internal processes. Thus the table in each of the DRTs will have, in general, different memory locations but each global "field name" will have the same "field value" stored in the different memory locations.

It will also be apparent to those skilled in the art that the abovementioned modification of the application program during loading can be accomplished in up to five ways by:
(i) re-compilation at loading,
(ii) by a pre-compilation procedure prior to loading,
(iii) compilation prior to loading,
(iv) a "just-in-time" compilation, or
(v) re-compilation after loading (but, or for example, before execution of the relevant or corresponding application code in a distributed environment).

Traditionally the term "compilation" implies a change in code or language, eg from source to object code or one language to another. Clearly the use of the term "compilation" (and its grammatical equivalents) in the present specification is not so restricted and can also include or embrace modifications within the same code or language.

In the first embodiment, a particular machine, say machine M2, loads the application code on itself, modifies it, and then loads each of the other machines M1, M3 ... Mn (either sequentially or simultaneously) with the modified code. In this arrangement, which may be termed "master/slave", each of machines M1, M3, ... Mn loads what it is given by machine M2.

In a still further embodiment, each machine receives the application code, but modifies it and loads the modified code on that machine. This enables the modification carried out by each machine to be slightly different being optimized based upon its architecture and operating system, yet still coherent with all other similar modifications.

In a further arrangement, a particular machine, say M1, loads the unmodified code and all other machines M2, M3 ... Mn do a modification to delete the original application code and load the modified version.

In all instances, the supply can be branched (ie M2 supplies each of M1, M3, M4, etc directly) or cascaded or sequential (ie M2 applies M1 which then supplies M3 which then supplies M4, and so on).

In a still further arrangement, the machines M1 to Mn, can send all load requests to an additional machine (not illustrated) which is not running the application program, which performs the modification via any of the aforementioned methods, and returns the modified routine to each of the machines M1 to Mn which then load the modified routine locally. In this arrangement, machines M1 to Mn forward all load requests to this additional machine which returns a modified routine to each machine. The modifications performed by this additional machine can include any of the modifications covered under the scope of the present invention.

Persons skilled in the computing arts will be aware of at least four techniques used in creating modifications in computer code. The first is to make the modification in the original (source) language. The second is to convert the original code (in say JAVA) into an intermediate representation (or intermediate language). Once this conversion takes place the modification is made and then the conversion is reversed. This gives the desired result of modified JAVA code.

The third possibility is to convert to machine code (either directly or via the abovementioned intermediate language). Then the machine code is modified before being loaded and executed. The fourth possibility is to convert the original code to an intermediate representation, which is then modified and subsequently converted into machine code.

The present invention encompasses all four modification routes and also a combination of two, three or even all four, of such routes.

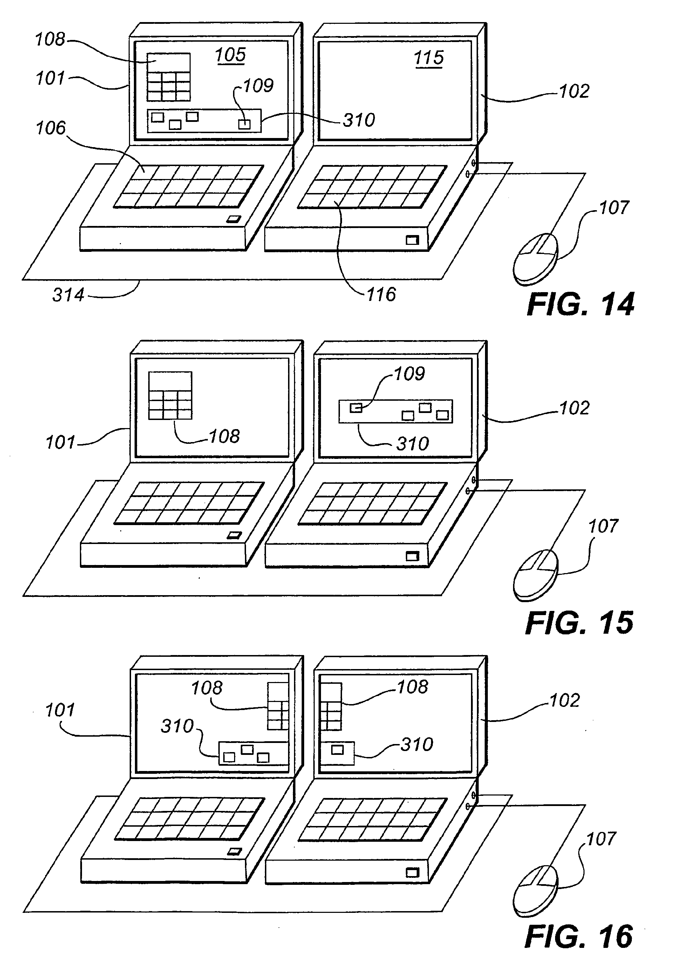

Turning now to Figs. 14-16, two laptop computers 101 and 102 are illustrated. The computers 101 and 102 are not necessarily identical and indeed, one can be an IBM or IBM-clone and the other can be an APPLE computer. The computers 101 and 102 have two screens 105, 115 two keyboards 106, 116 but a single mouse 107. The two machines 101, 102 are interconnected by a means of a single coaxial cable or twisted pair cable 314.

Two simple application programs are downloaded onto each of the machines 101, 102, the programs being modified as they are being loaded as described above. In this embodiment the first application is a simple calculator program and results in the image of a calculator 108 being displayed on the screen 105. The second program is a graphics program which displays four coloured blocks 109 which are of different colours and which move about at random within a rectangular box 310. Again, after loading, the box 310 is displayed on the screen 105. Each application operates independently so that the blocks 109 are in random motion on the screen 105 whilst numerals within the calculator 108 can be selected (with the mouse 107) together with a mathematical operator (such as addition or multiplication) so that the calculator 108 displays the result.

The mouse 107 can be used to "grab" the box 310 and move same to the right across the screen 105 and onto the screen 115 so as to arrive at the situation illustrated in Fig. 15. In this arrangement, the calculator application is being conducted on machine 101 whilst the graphics application resulting in display of box 310 is being conducted on machine 102.

However, as illustrated in Fig. 16, it is possible by means of the mouse 107 to drag the calculator 108 to the right as seen in Fig. 13 so as to have a part of the calculator 108 displayed by each of the screens 105, 115. Similarly, the box 310 can be dragged by means of the mouse 107 to the left as seen in Fig. 15 so that the box 310 is partially displayed by each of the screens 105,115 as indicated Fig. 16. In this configuration, part of the calculator operation is being performed on machine 101 and part on machine 102 whilst part of the graphics application is being carried out the machine 101 and the remainder is carried out on machine 102.

The foregoing describes only some embodiments of the present invention and modifications, obvious to those skilled in the art, can be made thereto without departing from the scope of the present invention. For example, reference to JAVA includes both the JAVA language and also JAVA platform and architecture.

Those skilled in the programming arts will be aware that when additional code or instructions is/are inserted into an existing code or instruction set to modify same, the existing code or instruction set may well require further modification (eg by re-numbering of sequential instructions) so that offsets, branching, attributes, mark up and the like are catered for.

Similarly, in the JAVA language memory locations include, for example, both fields and array types. The above description deals with fields and the changes required for array types are essentially the same mutatis mutandis. Also the present invention is equally applicable to similar programming languages (including procedural, declarative and object orientated) to JAVA including Microsoft.NET platform and architecture (eg Visual Basic, Visual C/C⁺⁺ and C#), FORTRAN, C/C⁺⁺, COBOL, BASIC etc.

The abovementioned arrangement, in which the JAVA code which updates field values is modified, is based on the assumption that either the runtime system (say, JAVA HOTSPOT VIRTUAL MACHINE written in C and Java) or the operating system (LINUX written in C and Assembler, for example) of each machine M1...Mn will ordinarily update memory on the local machine but not on any corresponding other machines. It is possible to leave the JAVA code which updates field values unamended and instead amend the LINUX or HOTSPOT routine which updates memory locally, so that it correspondingly updates memory on all other machines as well. In order to embrace such an arrangement the term "updating propagation routine" used herein in conjunction with maintaining the memory of all machines M1...Mn essentially the same, is to be understood to include within its scope both the JAVA routine and the "combination" of the JAVA routine and the LINUX or HOTSPOT code fragments which perform memory updating.

The terms object and class used herein are derived from the JAVA environment and are intended to embrace similar terms derived from different environments such as dynamically linked libraries (DLL), or object code packages, or function unit or memory locations.

The term "comprising" (and its grammatical variations) as used herein is used in the inclusive sense of "having" or "including" and not in the exclusive sense of "consisting only of".

### Copyright Notice

This patent specification contains material which is subject to copyright protection. The copyright owner (which is the applicant) has no objection to the reproduction of this patent specification or related materials from publicly available associated Patent Office files for the purposes of review, but otherwise reserves all copyright whatsoever. In particular, the various instructions are not to be entered into a computer without the specific written approval of the copyright owner.

### Annexure A

The following are program listings in the JAVA language:
A1. This first excerpt is part of the modification code. It searches through the code array, and when it finds a putstatic instruction (opcode 178), it implements the modifications.

   ```
 // START
 byte[] code = Code_attribute.code; // Bytecode of a given method in a
                                   // given classfile.
 int code_length = Code_attribute.code_length;
 int DRT = 99;       // Location of the CONSTANT_Methodref_info for the
                    // DRT.alert() method.
                for (int i=0; i<code_length; i++){
                if ((code[i] & 0xff) == 179){ // Putstatic instruction.
 System.arraycopy(code, i+3, code, i+6, code_length-(i+3));
 code[i+3] = (byte) 184; // Invokestatic instruction for the
                                 // DRT.alert() method.
 code[i+4] = (byte) ((DRT >>> 8) & 0xff);
 code[i+5] = (byte) (DRT & 0xff);
 }
 }
 // END
```
A2. This second excerpt is part of the DRT.alert() method. This is the body of the DRT.alert() method when it is called.

   ```
 // START
 public static void alert(){
 synchronized (ALERT_LOCK){
 ALERT_LOCK.notify(); // Alerts a waiting DRT thread in the background.
 }
 }
 // END
```
A3. This third excerpt is part of the DRT Sending. This code fragment shows the DRT in a separate thread, after being notified, sending the value across the network.

   ```
// START
MulticastSocket ms = DRT.getMulticastSocket();                   // The multicast socket
                                                                // used by the DRT for
                                                                // communication.
byte nameTag = 33;                           // This is the "name tag" on the network for this
                                            // field.
Field field = modifiedClass.getDeclaredField("myField1");                          // Stores
                                                                                  // the field
                                                                                 // from the
                                                                                // modified
                                                                               // class.
// In this example, the field is a byte field.
while (DRT.isRunning()){
synchronized (ALERT_LOCK){
ALERT_LOCK.wait(); // The DRT thread is waiting for the alert
// method to be called.
byte[] b = new byte[]{nameTag, field.getByte(null)};                           // Stores
                                                                              // the
                                                                              // nameTag
                                                                              // and the
                                                                              // value
                                                                              // of the
                                                                              // field from
                                                                              // the modified
                                                                              // class in a
                                                                              // buffer.
DatagramPacket dp = new DatagramPacket(b, 0, b.length);
ms.send(dp); // Send the buffer out across the network.
}
}
// END
```
A4. The fourth excerpt is part of the DRT receiving. This is a fragment of code to receive a DRT sent alert over the network.

   ```
 // START
 MulticastSocket ms = DRT.getMulticastSocket(); // The multicast socket
                                               // used by the DRT for
                                               // communication.
DatagramPacket dp = new DatagramPacket(new byte[2], 0, 2);
byte nameTag = 33;         // This is the "name tag" on the network for this
                          // field.
Field field = modifiedClass.getDeclaredField("myField1"); // Stores the
                                                          // field from
                                                          // the modified
                                                         // class.
// In this example, the field is a byte field.
while (DRT.isRunning){
   ms.receive(dp); // Receive the previously sent buffer from the network.
   byte[] b = dp.getData();
   if (b[0] == nameTag){ // Check the nametags match.
 field.setByte(null, b[1]); // Write the value from the network packet
                           // into the field location in memory.
   }
}
// END
```
A5. The fifth excerpt is an example application before modification has occurred. Method void setValues(int, int)
   0 iload_1
   1 putstatic #3 <Field int staticValue>
   4 aload_0
   5 iload_2
   6 putfield #2 <Field int instanceValue>
   9 return
A6. The sixth excerpt is the same example application in 5 after modification has been performed. The modifications are highlighted in bold.
   Method void setValues(int, int)
   0 iload_1
   1 putstatic #3 <Field int staticValue>
   **4 Idc #4 <String "example">**
   **6 iconst_0**
   **7 invokestatic #5 <Method void alert(java.lang.Object, int)>**
   10 aload_0
   11 iload_2
   12 putfield #2 <Field int instanceValue>
   **15 aload_0**
   **16 iconst_1**
   **17 invokestatic #5 <Method void alert(java.lang.Object, int)>**
   20 return
A7. The seventh excerpt is the source-code of the example application used in excerpt 5 and 6.

   ```
 import java.lang.*;
 public class example{
 /** Shared static field. */
 public static int staticValue = 0;
 /** Shared instance field. */
 public int instanceValue = 0;
 /** Example method that writes to memory (instance field). */
 public void setValues(int a, int b){
 staticValue = a;
 instanceValue = b;
 }
 }
```
A8. The eighth excerpt is the source-code of FieldAlert, which alerts the "distributed run-time" to propagate a changed value.

   ```
 import java.lang.*;
 import java.util.*;
 import java.net.*;
 import java.io.*;
 public class FieldAlert{
 /** Table of alerts. */
 public final static Hashtable alerts = new Hashtable();
 /** Object handle. */
 public Object reference = null;
 /** Table of field alerts for this object. */
 public boolean[] fieldAlerts = null;
 /** Constructor. */
 public FieldAlert(Object o, int initialFieldCount){
 reference = o;
 fieldAlerts = new boolean[initialFieldCount];
 }
 /** Called when an application modifies a value. (Both objects and
  classes) */
  public static void alert(Object o, int fieldID){
 // Lock the alerts table.
 synchronized (alerts){
    FieldAlert alert = (FieldAlert) alerts.get(o);
    if (alert == null){ // This object hasn't been alerted already,
                                // so add to alerts table.
       alert = new FieldAlert(o, fieldID + 1);
       alerts.put(o, alert);
    }
    if (fieldID >= alert.fieldAlerts.length) {
       // Ok, enlarge fieldAlerts array.
       boolean[] b = new boolean[fieldID+1];
       System.arraycopy(alert.fieldAlerts, 0, b, 0,
           alert.fieldAlerts.length);
       alert.fieldAlerts = b;
    }
    // Record the alert.
    alert.fieldAlerts[fieldID] = true;
    // Mark as pending.
    FieldSend.pending = true; // Signal that there is one or more
                                        // propagations waiting.
    // Finally, notify the waiting FieldSend thread(s)
    if (FieldSend.waiting){
       FieldSend.waiting = false;
       alerts.notify();
    }
 }
 }
 }
```
A9. The ninth excerpt is the source-code of FieldSend, which propagates changes values alerted to it via FieldAlert.

   ```
 import java.lang.*;
 import java.lang.reflect.*;
 import java.util.*;
 import java.net.*;
 import java.io.*;
 public class FieldSend implements Runnable{
 /** Protocol specific values. */
 public final static int CLOSE = -1;
 public final static int NACK = 0;
 public final static int ACK = 1;
 public final static int PROPAGATE_OBJECT = 10;
 public final static int PROPAGATE_CLASS = 20;
 /** FieldAlert network values. */
 public final static String group =
 System.getProperty("FieldAlert_network_group");
 public final static int port =
 Integer.parseInt(System.getProperty("FieldAlert_network_port"));
 /** Table of global ID's for local objects. (hashcode-to-globalID
 mappings) */
 public final static Hashtable objectToGlobalID = new Hashtable();
 /** Table of global ID's for local classnames. (classname-to-globalID
 mappings) */
 public final static Hashtable classNameToGlobalID = new Hashtable();
 /** Pending. True if a propagation is pending. */
 public static boolean pending = false;
 /** Waiting. True if the FieldSend thread(s) are waiting. */
 public static boolean waiting = false;
 /** Background send thread. Propagates values as this thread is alerted
 to their alteration. */
 public void run(){
 System.out.println("FieldAlert_network_group=" + group);
 System.out.println("FieldAlert network port=" + port);
 try{
    // Create a DatagramSocket to send propagated field values.
    DatagramSocket datagramSocket =
       new DatagramSocket(port, InetAddress.getByName(group));
    // Next, create the buffer and packet for all transmissions.
    byte[] buffer = new byte[512]; // Working limit of 512 bytes
                                               // per packet.
    DatagramPacket datagramPacket =
       new DatagramPacket(buffer, 0, buffer.length);
    while (!Thread.interrupted()){
       Object[] entries = null;
       // Lock the alerts table.
       synchronized (FieldAlert.alerts){
           // Await for an alert to propagate something.
           while (!pending){
              waiting = true;
              FieldAlert.alerts.wait();
              waiting = false;
           }
           pending = false;
           entries = FieldAlert.alerts.entrySet().toArray();
           // Clear alerts once we have copied them.
           FieldAlert.alerts.clear();
       }
       // Process each object alert in turn.
       for (int i=0; i<entries.length; i++){
           FieldAlert alert = (FieldAlert) entries[i];
           int index = 0;
           datagramPacket.setLength(buffer.length);
           Object reference = null;
           if (alert.reference instanceof String){
              // PROPAGATE_CLASS field operation.
              buffer[index++] = (byte) ((PROPAGATE_CLASS >> 24) & 0xff);
              buffer[index++] = (byte) ((PROPAGATE_CLASS >> 16) & 0xff);
              buffer[index++] = (byte) ((PROPAGATE_CLASS >> 8) & 0xff);
              buffer[index++] = (byte) ((PROPAGATE_CLASS >> 0) & 0xff);
              String name = (String) alert.reference;
              int length = name.length();
              buffer[index++] = (byte) ((length >> 24) & 0xff);
              buffer[index++] = (byte) ((length >> 16) & 0xff);
              buffer[index++] = (byte) ((length >> 8) & 0xff);
              buffer[index++] = (byte) ((length >> 0) & 0xff);
              byte[] bytes = name.getBytes();
              System.arraycopy(bytes, 0, buffer, index, length);
              index += length;
           }else{ // PROPAGATE_OBJECT field operation.
              buffer[index++] =
                  (byte) ((PPOPAGATE_OBJECT >> 24) & 0xff>;
              buffer[index++] =
                  (byte) ((PROPAGATE_OBJECT >> 16) & 0xff);
              buffer[index++] = (byte) ((PROPAGATE_OBJECT >> 8) & 0xff);
              buffer[index++] = (byte) ((PROPAGATE_OBJECT >> 0) & 0xff);
              int globalID = ((Integer)
                  objectToGlobalID.get(alert.reference)).intValue();
              buffer[index++] = (byte) ((globalID >> 24) & 0xff);
              buffer[index++] = (byte) ((globalID >> 16) & 0xff);
              buffer[index++] = (byte) ((globalID >> 8) & 0xff);
              buffer [index++] = (byte) ((globalID >> 0) & 0xff);
              reference = alert.reference;
           }
           // Use reflection to get a table of fields that correspond to
           // the field indexes used internally.
           Field[] fields = null;
           if (reference == null){
              fields = FieldLoader.loadClass((String)
                 alert.reference).getDeclaredFields();
           }else{
              fields = alert.reference.getClass().getDeclaredFields();
           }
           // Now encode in batch mode the fieldID/value pairs.
           for (int j=0; j<alert.fieldAlerts.length; j++){
              if (alert.fieldAlerts[j] == false)
                 continue;
              buffer[index++] = (byte) ((j >> 24) & 0xff);
              buffer[index++] = (byte) ((j >> 16) & 0xff);
              buffer[index++] = (byte) ((j >> 8) & 0xff);
             buffer[index++] = (byte) ((j >> 0) & 0xff);
              // Encode value.
              Class type = fields[j].getType();
              if (type == Boolean.TYPE){
                 buffer[index++] =(byte)
                     (fields[j].getBoolean(reference)? 1 : 0);
              }else if (type == Byte.TYPE)[{
                 buffer[index++] = fields[j].getByte(reference);
              }else if (type == Short.TYPE){
                 short v = fields[j].getShort(reference);
                 buffer[index++] =(byte) ((v >> 8) & 0xff);
                 buffer[index++] = (byte) ((v >> 0) & 0xff);
              }else if (type == Character.TYPE){
                 char v = fields[j].getChar(reference);
                 buffer[index++] = (byte) ((v >> 8) & 0xff);
                 buffer[index++] = (byte) ((v >> 0) & 0xff);
              }else if (type == Integer.TYPE){
                 int v = fields[j].getInt(reference);
                 buffer[index++] = (byte) ((v >> 24) & 0xff);
                 buffer[index++] = (byte) ((v >> 16) & 0xff);
                 buffer[index++] = (byte) ((v >> 8) & 0xff);
                 buffer[index++] = (byte) ((v >> 0) & 0xff);
              }else if (type == Float.TYPE){
                 int v = Float.floatToIntBits{
                     fields[j].getFloat(reference));
                 buffer[index++] = (byte) ((v >> 24) & 0xff);
                 buffer[index++] = (byte) ((v >> 16) & 0xff);
                 buffer[index++] = (byte) ((v >> 8) & 0xff);
                 buffer[index++] = (byte) ((v >> 0) & 0xff);
              }else if (type == Long.TYPE){
                 long v = fields[j].getLong(reference);
                 buffer[index++] = (byte) ((v >> 56) & 0xff);
                 buffer[index++] = (byte) ((v >> 46) & 0xff);
                 buffer[index++] = (byte) ((v >> 40) & 0xff);
                 buffer[index++] = (byte) ((v >> 32) & 0xff);
                 buffer[index++] = (byte) ((v >> 24) & 0xff);
                 buffer[index++] = (byte) ((v >> 16) & 0xff);
                 buffer[index++] = (byte) ((v >> 8) & 0xff);
                 buffer[index++] = (byte) ((v >> 0) & 0xff);
              }else if (type == Double.TYPE){
                 long v = Double.doubleToLongBits(
                     fields[j].getDouble(reference));
                 buffer[index++] = (byte) ((v >> 56) & 0xff);
                 buffer[index++] = (byte) ((v >> 48) & 0xff);
                 buffer[index++] = (byte) ((v >> 40) & 0xff);
                 buffer[index++] = (byte) ((v >> 32) & 0xff);
                 buffer[index++] = (byte) ((v >> 24) & 0xff);
                 buffer[index++] = (byte) ((v >> 16) & 0xff);
                 buffer[index++] = (byte) ((v >> 8) & 0xff);
                 buffer[index++] = (byte) ((v >> 0) & 0xff);
              }else{
                 throw new AssertionError("Unsupported type.");
              }
           }
           // Now set the length of the datagrampacket.
          datagramPacket.setLength(index);
           // Now send the packet.
          datagramSocket.send(datagramPacket);
       }
    }
 }catch (Exception e){
    throw new AssertionError("Exception: " + e.toString());
 }
 }
 }
```
A10. The tenth excerpt is the source-code of FieldReceive, which receives propagated changed values sent via FieldSend.

   ```
import java.lang.*;
import java.lang.reflect.*;
import java.util.*;
import java.net.*;
import java.io.*;
public class FieldReceive implements Runnable{
   /** Protocol specific values. */
   public final static int CLOSE = -1;
   public final static int NACK = 0;
   public final static int ACK = 1;
   public final static int PROPAGATE_OBJECT = 10;
   public final static int PROPAGATE_CLASS = 20;
   /** FieldAlert network values. */
   public final static String group =
      System.getProperty("FieldAlert network_group");
   public final static int port =
   Integer.parseInt(System.getProperty("FieldAlert_network_port"));
   /** Table of global ID's for local objects. (globalID-to-hashcode
       mappings) */
   public final static Hashtable globalIDToObject = new Hashtable();
   /** Table of global ID's for local classnames. (globalID-to-classname
       mappings) */
   public final static Hashtable globalIDToClassName = new Hashtable();
   /** Called when an application is to acquire a lock. */
   public void run(){
      System.out.println("FieldAlert_network group=" + group);
      System.out.println("FieldAlert_network_port=" + port);
      try{
         // Create a DatagramSocket to send propagated field values from
         MulticastSocket multicastSocket = new MulticastSocket(port);
         multicastSocket.joinGroup(InetAddress.getByName(group));
         // Next, create the buffer and packet for all transmissions.
         byte[] buffer = new byte[512];               // Working limit of 512
                                                     // bytes per packet.
         DatagramPacket datagramPacket =
            new DatagramPacket(buffer, 0, buffer.length);
         while (!Thread.interrupted()){
            // Make sure to reset length.
            datagramPacket.setLength(buffer.length);
            // Receive the next available packet.
            multicastSocket.receive(datagramPacket);
            int index = 0, length = datagramPacket.getLength();
            // Decode the command.
            int command = (int) (((buffer[index++] & 0xff) << 24)
               | ((buffer[index++] & 0xff) << 16)
               | ((buffer[index++] & 0xff) << 8)
               | (buffer[index++] & 0xff));
            if (command == PROPAGATE_OBJECT){ // Propagate operation for
                                             // object fields.
              // Decode global id.
              int globalID = (int) (((buffer[index++] & 0xff) << 24)
               | ((buffer[index++] & 0xff) << 16)
               | ((buffer[index++] & 0xff) << 8)
               | (buffer[index++] & 0xff));
              // Now, need to resolve the object in question.
              Object reference = globalIDToObject.get(
                 new Integer(globalID));
              // Next, get the array of fields for this object.
              Field[] fields = reference.getClass().getDeclaredFields();
              while (index < length){
              // Decode the field id.
              int fieldID = (int) (((buffer[index++] & 0xff) << 24)
               | ((buffer[index++] & 0xff) << 16)
               | ((buffer[index++] & 0xff) << 8)
               | (buffer[index++] & 0xff));
              // Determine value length based on corresponding field
              // type.
              Field field = fields[fieldID];
              Class type = field.getType();
              if (type == Boolean.TYPE)(
                 boolean v = (buffer[index++] == 1 ? true : false);
                 field.setBoolean(reference, v);
              }else if (type == Byte.TYPE)( {
                 byte v = buffer[index++];
                 field. setByte(reference, v);
              }else if (type == Short. TYPE){
                 short v = (short) (((buffer[index++] & 0xff) << 8)
                    | (buffer[index++] & 0xff));
                 field.setShort(reference, v);
              }else if (type == Character. TYPE) {
                 char v = (char) (((buffer[index++] & 0xff). << 8)
                    | (buffer[index++] & 0xff));
field.setChar(reference, v);
              }else if (type == Integer. TYPE){
                 int v = (int) (((buffer[index++] & 0xff) << 24)
                    | ((buffer[index++] & 0xff) << 16)
                    | ((buffer[index++] & 0xff) << 8)
                    | (buffer[index++] & 0xff));
                 field. setInt (reference, v);
              }else if (type == Float. TYPE){
int v = (int) (((buffer[index++] & 0xff) << 24)
                    | ((buffer[index++] & 0xff) << 16)
                    | ((buffer[index++] & 0xff) << 8)
                    | (buffer[index++] & 0xff));
                 field. setFloat (reference, Float. intBitsToFloat(v));
              }else if (type == Long.TYPE) {
                 long v = (long) (((buffer[index++] & 0xff) << 56)
                    | ((buffer[index++] & 0xff) << 48)
                    | ((buffer[index++] & 0xff) << 40)
                    | ((buffer[index++] & 0xff) << 32)
                    | ((buffer[index++] & 0xff) << 24)
                    | ((buffer[index++] & 0xff) << 16)
                    | ((buffer(index++] & 0xff) << 8)
                    | (buffer[index++] & 0xff))
                 field.setLong(reference, v);
              }else if (type == Double.TYPE){
                 long v = (long) (((buffer[index++] & 0xff) << 56)
                    | ((buffer[index++] & 0xff) << 48)
                    | ((buffer(index++] & 0xff) << 40)
                    | ((buffer[index++] & 0xff) << 32)
                    | ((buffer[index++] & 0xff) << 24)
                    | ((buffer[index++] & 0xff) << 16)
                    | ((buffer[index++] & 0xff) << 8)
                    | (buffer[index++] & 0xff));
                 field.setDouble(reference, Double.longBitsToDouble(v));
              }else{
                 throw new AssertionError("Unsupported type.");
              }
     }
}else if (command == PROPAGATE_CLASS){ { // Propagate an update
to class fields.
              // Decode the classname.
              int nameLength = (int) (((buffer[index++] & 0xff) << 24)
                 | ((buffer[index++] & 0xff) << 16)
                 | ((buffer[index++] & 0xff) << 8)
                 | (buffer[index++] & 0xff))
              String name = new String(buffer, index, nameLength);
              index += nameLength;
              // Next, get the array of fields for this class.
              Field[] fields =
                 FieldLoader.loadClass(name) .getDeclaredFields();
              // Decode all batched fields included in this propagation
              // packet.
              while (index < length){
              // Decode the field id.
              int fieldID = (int) (((buffer[index++] & 0xff) << 24)
                    | ((buffer[index++] & 0xff) << 16)
                    | ((buffer[index++] & 0xff) << 8)
                    | (buffer[index++] & 0xff))
              // Determine field type to determine value length.
                 Field field = fields[fieldlD];
                 Class type = field.getType();
                 if (type == Boolean.TYPE){
                    boolean v = (buffer[index++] == 1 ? true : false);
                    field.setBoolean(null, v);
                 }else if (type == Byte.TYPE){
                    byte v = buffer[index++];
                    field.setByte(null, v);
                 }else if (type == Short.TYPE){
                    short v = (short) (((buffer[index++] & 0xff) << 8)
                       | (buffer[index++] & 0xff))
                    field.setShort(null, v);
                 }else if (type == Character.TYPE) {
                 char v = (char) (((buffer[index++] & 0xff) << 8)
                       |(buffer[index++] & 0xff))
                 field.setChar(null, v);
                 ]else if (type == Integer.TYPE) {
                    int v = (int) (((buffer[index++] & 0xff) << 24)
                       | ((buffer[index++] & 0xff) << 16)
                       | ((buffer[index++] & 0xff) << 8)
                       | (buffer[index++] & 0xff))
                    field.setInt(null, v);
                 }else if (type == Float.TYPE){
                    int v = (int) (((buffer[index++] & 0xff) << 24)
                       | ((buffer[index++] & 0xff) << 16)
                       | ((buffer[index++] & 0xff) << 8)
                       | (buffer[index++] & 0xff))
                   field.setFloat(null, Float.intBitsToFloat(v));
                 )else if (type == Long.TYPE) {
                   long v = (long) (((buffer[index++] & 0xff) << 56)
                       | ((buffer[index++] & 0xff) << 48)
                       | ((buffer[index++] & 0xff) << 40)
                       | ((buffer[index++] & 0xff) << 32)
                       | ((buffer[index++] & 0xff) << 24)
                       | ((buffer[index++] & 0xff) << 16)
                       | ((buffer[index++] & 0xff) << 8)
                       | (buffer[index++] & 0xff));
                   field.setLong(null, v);
                 }else if (type == Double.TYPE){
                   long v = (long) (((buffer[index++] & 0xff) << 56)
                       | ((buffer[index++] & 0xff) << 48)
                       | ((buffer[index++] & 0xff) << 40)
                       | ((buffer[index++] & 0xff) << 32)
                       | ((buffer[index++] & 0xff) << 24)
                       | ((buffer[index++] & 0xff) << 16)
                       | ((buffer[index++] & 0xff) << 8)
                       | (buffer[index++] & 0xff))
                    field.setDouble(null, Double.longBitsToDouble(v));
                 }else{ // Unsupported field type.
                    throw new AssertionError("Unsupported type.");
                       }
                     }
                   }
                 }
              )catch (Exception e) {
                 throw new AssertionError("Exception: " + e.toString());
             }
        }
}
```
A11. FieldLoader.java
   This excerpt is the source-code of FieldLoader, which modifies an application as it is being loaded.

   ```
 import java.lang.*;
 import java.io.*;
 import java.net.*;
 public class FieldLoader extends URLClassLoader{
 public FieldLoader(URL[] urls){
 super(urls);
 }
 protected Class findClass(String name)
 throws ClassNotFoundException{
 ClassFile cf = null;
 try{
    BufferedInputStream in =
       new BufferedInputStream(findResource(
       name.replace('.', '/').concat(".class")).openStream()):
    cf = new ClassFile(in);
 }catch (Exception e){throw new ClassNotFoundException(e.toString());}
 // Class-wide pointers to the 1dc and alert index.
 int 1dcindex = -1;
 int alertindex = -1;
 for (int i=0; i<cf.methods_count; i++){
    for (int j=0; j<cf.methods[i].attributes_count; j++){
       if (!(cf.methods[i].attributes[j] instanceof Code_attribute))
           continue;
       Code_attribute ca = (Code_attribute)
       cf.methods[i].attributes[j];
       boolean changed = false;
       for (int z=0; z<ca.code.length; z++){
           if ((ca.code[z][0] & 0xff) == 179){ // Opcode for a
           PUTSTATIC
                                                      // instruction.
              changed = true;
              // The code below only supports fields in this class.
              // Thus, first off, check that this field is local to this
              // class.
              CONSTANT_Fieldref_info fi = (CONSTANT_Fieldref_info)
                 cf.constant_pool[(int) (((ca.code[z][1] & 0xff> « 8) I
                  (ca.code[z][2] & 0xff))];
              CONSTANT_Class_info ci = (CONSTANT_Class_info)
                 cf.constant_pool[fi.class_index];
              String className =
                 cf. constant_pool [ci.name_index] .toString();
              if (!name.equals(className)) {
                 throw new AssertionError("This code only supports
                 fields "
                     "local to this class");
              }
              // Ok, now search for the fields name and index.
              int index = 0;
              CONSTANT_NameAndType_info ni = (CONSTANT_NameAndType_info)
                 cf.constant_pool[fi.name_and_type_index];
              String fieldName =
                 cf.constant_pool[ni.name_index] .toString();
              for (int a=0; a<cf.fields_count; a++){
                 String fn = cf.constant_pool[
                     cf.fields[a].name_index].toString();
                 if (fieldName.equals(fn)){
                     index = a;
                     break;
                  }
              }
              // Next, realign the code array, making room for the
              // insertions.
              byte[] [] code2 = new byte[ca.code.length+3][];
              System.arraycopy(ca.code, 0, code2, 0, z+1);
              System.arraycopy(ca.code, z+1, code2, z+4,
                 ca.code.length-(z+1));
              ca.code = code2;
              // Next, insert the LDC_W instruction.
              if (ldcindex == -1){
                 CONSTANT_String_info csi =
                     new CONSTANT_String_info(ci.name_index);
                 cp_info[] cpi = new cp_info[cf.constant_pool.length+1];
                 System.arraycopy(cf.constant pool, 0, cpi, 0,
                     cf.constant_pool.length);
                 cpi[cpi.length - 1] = csi;
                 ldcindex = cpi.length-1;
                 cf.constant_pool = cpi;
                 cf.constant_pool_count++;
              }
              ca.code[z+1] = new byte[3];
              ca.code[z+1][0] = (byte) 19;
              ca.code[z+1] [1] = (byte) ((ldcindex >> 8) & 0xff);
              ca.code[z+1] [2] = (byte) (ldcindex & 0xff);
              // Next, insert the SIPUSH instruction.
              ca.code[z+2] = new byte[3];
              ca.code[z+2][0] = (byte) 17;
              ca.code[z+2] [1] = (byte) ((index >> 8) & 0xff);
              ca.code[z+2] [2] = (byte) (index & 0xff);
              // Finally, insert the INVOKESTATIC instruction.
              if (alertindex == -1) {
                 // This is the first time this class is encourtering
                 the
                 // alert instruction, so have to add it to the constant
                 // pool.
                 cp_info[] cpi = new cp_info[cf.constant_pool.length+6];
                 System.arraycopy(cf.constant_pool, 0, cpi, 0,
                     cf.constant_pool.length);
                 cf.constant_pool = cpi;
                 cf.constant_pool_count += 6;
                 CONSTANT_Utf8_info u1 =
                     new CONSTANT_Utf8_info("FieldAlert");
                 cf.constant_pool[cf.constant_pool.length-6] = u1;
                 CONSTANT_Class_info c1 = new CONSTANT_Class_info(
                     cf.constant_pool_count-6);
                 cf.constant_pool[cf.constant_pool.length-5] = c1;
                 u1 = new CONSTANT_Utf8_info("alert");
                 cf.constant_pool[cf.constant_pool.length-4] = u1;
                 u1 = new CONSTANT_Utf8 info("(Ljava/lang/Object;I)V");
                 cf.constant pool[cf.constant pool.length-3] = u1;
                 CONSTANT_NameAndType_info n1 =
                     new CONSTANT_NameAndType_info(
                     cf.constant_pool.length-4, cf.constant_pool.length-
                     3);
                 cf.constant_pool[cf.constant_pool.length-2] = n1;
                 CONSTANT_Methodref_info m1 = new
                 CONSTANT_Methodref_info(
                     cf.constant_pool.length-5, cf.constant_pool.length-
                     2);
                 cf.constant_pool[cf.constant_pool.length-1] = m1;
                 alertindex = cf.constant_pool.length-1;
              }
              ca.code[z+3] = new byte[3];
              ca.code[z+3] [0] _ (byte) 184;
              ca.code[z+3] [1] = (byte) ((alertindex >> 8) & 0xff);
              ca.code[z+3] [2] = (byte) (alertindex & 0xff);
              // And lastly, increase the CODE_LENGTH and
              ATTRIBUTE_LENGTH
              // values.
              ca.code_length += 9;
              ca.attribute_length += 9;
          }
       }
       // If we changed this method, then increase the stack size by
       one.
       if (changed){
          ca.max_stack++; // Just to make sure.
       }
    }
 }
 try{
           ByteArrayOutputStream out = new ByteArrayOutputStream();
           cf.serialize(out);
           byte[] b = out.toByteArray();
           return defineclass(name, b, 0, b.length);
        }catch (Exception e){
           throw new ClassNotFoundException(name);
        }
   }
 }
```
A12. **Attribute_info.java**
   Convience class for representing attribute_info structures within ClassFiles.

   ```
 import java.lang.*;
 import java.io.*;
 /** This abstract class represents all types of attribute_info
 * that are used in the JVM specifications.
 *
 * All new attribute_info subclasses are to always inherit from this
 * class.
 */
 public abstract class attribute_info{
 public int attribute_name_index;
 public int attribute_length;
 /** This is used by subclasses to register themselves
 * to their parent classFile.
 */
 attribute_info(ClassFile cf){}
 /** Used during input serialization by ClassFile only. */
 attribute_info(ClassFile cf, DataInputStream in)
   throws IOException{
   attribute_name_index = in.readChar();
   attribute_length = in.readInt();
   }
   /** Used during output serialization by ClassFile only. */
   void serialize(DataOutputStream out)
   throws IOException{
   out.writeChar(attribute_name_index);
   out.writeInt(attribute_length);
   }
   /** This class represents an unknown attribute_info that
   * this current version of classfile specification does
   * not understand.
   */
   public final static class Unknown extends attribute_info{
   byte[] info;
   /** Used during input serialization by ClassFile only. */
   Unknown(ClassFile cf, DataInputStream in)
       throws IOException{
       super(cf, in);
       info = new byte[attribute_length);
       in.read(info, 0, attribute_length);
   }
   /** Used during output serialization by ClassFile only. */
   void serialize(DataoutputStream out)
       throws IOException{
       ByteArrayOutputStream baos = new ByteArrayOutputStream();
       super.serialize(out);
       out.write(info, 0, attribute_length);
   }
   }
   }
```
A13. **ClassFile.java**
   Convience class for representing ClassFile structures.

   ```
import java.lang.*;
 import java.io.µ*;
 import java.util.*;
 /** The ClassFile follows verbatim from the JVM specification. */
 public final class ClassFile {
 public int magic;
 public int minor_version;
 public int major_version;
 public int constant_pool_count;
 public cp_info[] constant_pool;
 public int access_flags;
 public int this_class;
 public int super_class;
 public int interfaces_count;
 public int[] interfaces;
 public int fields_count;
 public field_info[] fields;
 public int methods_count;
 public method_info[] methods;
 public int attributes_count;
 public attribute_info[] attributes;
 /** Constructor. Takes in a byte stream representation and transforms
 * each of the attributes in the ClassFile into objects to allow for
 * easier manipulation.
 */
 public ClassFile(InputStream ins)
  throws IOException{
  DataInputStream in = (ins instanceof DataInputStream ?
       (DataInputStream) ins : new DataInputStream(ins));
  magic = in.readInt();
  minor_version = in.readChar();
  major_version = in.readChar();
  constant_pool_count = in.readChar();
  constant_pool = new cp_info[constant_pool_count];
  for (int i=1; i<constant pool count; i++)( {
       in.mark(1);
       int s = in.read();
       in.reset();
       switch (s)({
            case 1:
                constant_pool[i] = new CONSTANT_Utf8_info(this, in);
                break;
            case 3:
                constant_pool(i] = new CONSTANT_Integer_info(this, in);
                break;
            case 4:
                constant_pool[i] = new CONSTANT_Float_info(this, in);
                break;
            case 5:
                 constant_pool(i] = new CONSTANT_Long_info(this, in);
                 i++;
                 break;
            case 6:
                 constant_pool[i] = new CONSTANT_Double_info(this, in);
                 i++;
                 break;
            case 7:
                 constant_pool[i] = new CONSTANT_Class_info(this, in);
                 break;
            case 8:
                 constant_pool[i] = new CONSTANT-String-info(this, in);
                 break;
            case 9:
                 constant_pool[i] = new CONSTANT_Fieldref_info(this, in);
                 break;
            case 10:
                 constant_pool[i] = new CONSTANT_Methodref_info(this,
                 in);
                break;
            case 11:
                 constant_pool[i] =
                     new CONSTANT_InterfaceMethodref_info(this, in);
                break;
            case 12:
                 constant_pool[i] = new CONSTANT_NameAndType_info(this,
                 in);
                break;
            default:
                throw new ClassFormatError("Invalid ConstantPoolTag");
        }
   }
   access_flags = in.readChar();
   this_class = in.readChar():
   super_class = in.readChar();
   interfaces_count = in.readChar();
   interfaces = new int[interfaces_count];
   for (int i=0; i<interfaces_count; i++)
       interfaces[i] = in.readChar();
   fields_count = in.readChar();
   fields = new field_info[fields_count];
   for (int i=0; i<fields_count; i++) {
       fields[i] = new field_info(this, in);
   }
   methods_count = in.readChar();
   methods = new method_info[methods_count];
   for (int i=0; i<methods_count; i++) {
       methods[i] = new method_info(this, in);
   }
   attributes_count = in.readChar();
   attributes = new attribute_info[attributes_count];
   for (int i=0; i<attributes_count; i++)( {
       in.mark(2);
       String s = constant_pool[in.readChar()].toString();
       in.reset();
       if (s.equals("SourceFile"))
            attributes[i] = new SourceFile_attribute(this, in);
       else if (s.equals("Deprecated"))
            attributes[i] = new Deprecated_attribute(this, in);
       else if (s.equals("InnerClasses"))
            attributes[i] = new InnerClasses_attribute(this, in);
       else
            attributes[i] = new attribute_info.Unknown(this, in);
   }
   }
   /** Serializes the ClassFile object into a byte stream. */
   public void serialize(OutputStream o)
   throws IOException{
   DataOutputStream out = (o instanceof DataOutputStream ?
        (DataOutputStream) o : new DataOutputStream(o));
   out.writelnt(magic);
   out.writeChar(minor_version);
   out.writeChar(major_version);
   out.writeChar(constant_pool_count);
   for (int i=1; i<constant pool_count; i++){
       constant_pool[i].serialize(out);
       if (constant_pool[i] instanceof CONSTANT_Long_info ∥
                constant_pool[i] instanceof CONSTANT_Double info)
            i++;
   }
   out.writeChar(access_flags);
  out.writeChar(this_class);
  out.writeChar(super_class);
   out.writeChar(interfaces_count);
   for (int i=0; i<interfaces_count; i++)
       out.writeChar(interfaces[i));
  out.writeChar(fields_count);
   for (int i=0; i<fields_count; i++)
       fields[i].serialize(out);
  out.writeChar(methods_count);
   for (int i=0; i<methods_count; i++)
       methods[i].serialize(out);
  out.writeChar(attributes_count);
   for (int i=0; i<attributes_count; i++)
       attributes[i].serialize(out);
   // Flush the outputstream just to make sure.
  out.flush();
  }
  }
```
A14. **Code_attribute.java**
   Convience class for representing Code_attribute structures within ClassFiles.

   ```
import java.util.*;
import java.lang.*;
import java.io.*;
/**
* The code[] is stored as a 2D array. */
public final class Code_attribute extends attribute_info{
    public int max_stack;
    public int max_locals;
    public int code_length;
    public byte[][] code;
    public int exception_table_length;
    public exception_table[] exception_table;
    public int attributes_count;
    public attributes;
    /** Internal class that handles the exception table. */
    public final static class exception table{
        public int start_pc;
        public int end_pc;
        public int handler_pc;
        public int catch_type;
    }
    /** Constructor called only by method_info. */
    Code_attribute(ClassFile cf, int ani, int al, int ms, int m1, int c1,
                byte[][] cd, int etl, exception_table[] et, int ac,
                attribute_info[] a){
    super(cf);
    attribute_name_index = ani;
    attribute_length = al;
    max_stack = ms;
    max_locals = ml;
    code_length = cl;
    code = cd;
    exception_table_length = etl;
    exception_table = et;
    attributes_count = ac;
    attributes = a;
}
/** Used during input serialization by ClassFile only. */
Code_attribute (ClassFile cf, DataInputStream in)
    throws IOException{
    super(cf, in);
    max_stack = in.readChar();
    max_locals = in.readChar();
    code_length = in.readInt();
    code = new byte[code_length][];
    int i = 0;
    for (int pos=0; pos<code_length; i++) {
        in.mark(1);
        int s = in.read();
        in.reset ();
        switch (s){
            case 16:
            case 18:
            case 21:
            case 22:
            case 23:
            case 24:
            case 25:
            case 54:
            case 55:
            case 56:
            case 57:
            case 58:
            case 169:
            case 188:
            case 196:
                code[i] = new byte[2];
                break;
            case 17:
            case 19:
            case 20:
            case 132:
            case 153:
            case 154:
            case 155:
            case 156:
            case 157:
            case 158:
            case 159:
            case 160:
            case 161:
            case 162:
            case 163:
            case 164:
            case 165:
            case 166:
            case 167:
            case 168:
            case 178:
            case 179:
            case 180:
            case 181:
            case 182:
            case 183:
            case 184:
            case 187:
            case 189:
            case 192:
            case 193:
            case 198:
            case 199:
            case 209:
                code[i] = new byte[3];
                break;
            case 197:
                code[i] = new byte[4];
                break;
            case 185:
            case 200:
            case 201:
                code[i] = new byte[5];
                break;
            case 170:{
                int pad = 3 - (pos % 4);
                in.mark(pad+13);                               // highbyte
                in.skipBytes (pad+5);                         // lowbyte
                int low = in.readInt ();
                code [i] =
                     new byte[pad + 13 + ((in.readInt() - low + 1) * 4)];
                in.reset ();
                break;
            } case 171:{
                int pad = 3 - (pos % 4);
                in.mark(pad+9);
                in.skipBytes(pad+5);
                code[i] = new byte[pad + 9 + (in.readInt() * 8)];
                in.reset () ;
                break;
            }default:
                code[i] = new byte[1];
        }
        in.read(code[i], 0, code[i].length);
        pos += code[i].length;
}
// adjust the array to the new size and store the size
byte[][] temp = new byte[i][];
System.arraycopy(code, 0, temp, 0, i);
code = temp;
exception_table_length = in.readChar();
exception_table =
        new Code_attribute.exception_table[exception_table_length] ;
for (i=0; i<exception_table_length; i++) {
        exception_table[i] = new exception_table ();
        exception_table[i].start_pc = in.readChar();
        exception_table[i].end_pc = in.readChar();
        exception_table[i].handler_pc = in.readChar();
        exception_table[i].catch_type = in.readChar();
}
attributes_count = in.readChar();
attributes = new attribute_info[attributes_count];
for (i=0; i<attributes_count; i++){
        in.mark(2); -
        String s = cf.constant_pool[in.readChar()].toString();
        in.reset();
        if (s.equals("LineNumberTable"))
            attributes[i] = new LineNumberTable_attribute(cf, in);
        else if (s.equals("LocalVariableTable"))
            attributes[i] = new LocalVariableTable_attribute(cf, in);
        else
            attributes[i] = new attribute_info.Unknown(cf, in);
    }
}
/** Used during output serialization by ClassFile only.
*/
void serialize(DataOutputStream out)
    throws IOException {
        attribute_length = 12 + code_length +
            (exception_table_length * 8);
        for (int i=0; i<attributes_count; i++)
            attribute_length += attributes[i].attribute_length + 6;
        super.serialize(out);
        out.writeChar(max_stack);
        out.writeChar(max_locals);
        out.writeInt(code_length);
        for (int i=0, pos=0; pos<code_length; i++) {
            out.write(code[i], 0, code[i].length);
            pos += code[i].length;
        }
        out.writeChar(exception_table_length);
        for (int i=0; i<exception_table_length; i++) {
            out.writeChar(exception_table[i].start_pc);
            out.writeChar(exception_table[i].end_pc);
            out.writeChar(exception_table[i].handler_pc);
            out.writeChar(exception_table[i].catch_type);
        }
        out.writeChar(attributes_count);
        for (int i=0; i<attributes_count; i++)
            attributes[i].serialize(out);
   }
}
```
A15. **CONSTANT_Class_info.java**
   Convience class for representing CONSTANT_Class_info structures within ClassFiles.

   ```
import java.lang.*;
 import java.io.*;
 /** Class subtype of a constant pool entry. */
 public final class CONSTANT_Class_info extends cp_info{
 /** The index to the name of this class. */
 public int name_index = 0;
 /** Convenience constructor.
 */
 public CONSTANT_Class_info(int index) {
  tag = 7;
  name index = index;
  }
  /** Used during input serialization by ClassFile only. */
  CONSTANT_Class_info(ClassFile cf, DataInputStream in)
   throws IOException{
   super(cf, in);
   if (tag != 7)
       throw new ClassFormatError();
   name index = in.readChar();
}
/** Used during output serialization by ClassFile only. */
void serialize(DataOutputStream out)
throws IOException{
out.writeByte(tag);
out.writeChar(name_index);
}
}
```
A16. **CONSTANT_Double_info.java**
   Convience class for representing CONSTANT_Double_info structures within ClassFiles.

   ```
 import java.lang.*;
 import java.io.*;
 /** Double subtype of a constant pool entry. */
 public final class CONSTANT_Double_info extends cp_info{
 /** The actual value. */
 public double bytes;
 public CONSTANT_Double_info(double d) {
  tag = 6;
  bytes = d;
  }
  /** Used during input serialization by ClassFile only. */
  CONSTANT_Double_info(ClassFile cf, DataInputStream in)
  throws IOException{
  super(cf, in);
  if (tag != 6)
       throw new ClassFormatError();
  bytes = in.readDouble();
  }
  /** Used during output serialization by ClassFile only. */
  void serialize(DataOutputStream out)
  throws IOException{
  out.writeByte(tag);
  out.writeDouble(bytes);
  long 1 = Double.doubleToLongBits(bytes);
  }
  }
```
A17. **CONSTANT_Fieldref_info.java**
   Convience class for representing CONSTANT_Fieldref_info structures within ClassFiles.

   ```
 import java.lang.*;
 import java.io.*;
 /** Fieldref subtype of a constant pool entry. */
 public final class CONSTANT_Fieldref_info extends cp_info{
     /** The index to the class that this field is referencing to. */
     public int class_index;
     /** The name and type index this field if referencing to. */
     public int name_and_type_index;
     /** Convenience constructor. */
     public CONSTANT_Fieldref_info(int class_index, int name_and_type_index)
{
          tag = 9;
          this.class_index = class_index;
          this.name_and_type_index = name_and_type_index;
     }
     /** Used during input serialization by ClassFile only. */
     CONSTANT_Fieldref_info(ClassFile cf, DataInputStream in)
          throws IOException{
          super(cf, in);
          if (tag != 9)
               throw new ClassFormatError();
               class_index = in.readChar();
               name and type index = in.readchar();
     }
     /** Used during output serialization by ClassFile only. */
     void serialize(DataOutputStream out)
               throws IOException{
               out.writeByte(tag);
               out.writeChar(class_index);
               out.writeChar(name_and_type_index);
}
}
```
A18. **CONSTANT_Float_info.java**
   Convience class for representing CONSTANT_Float_info structures within ClassFiles.

   ```
 import java.lang.*;
 import java.io.*;
 /** Float subtype of a constant pool entry. */
 public final class CONSTANT_Float_info extends cp_info{
     /** The actual value. */
     public float bytes;
     public CONSTANT_Float_info(float f) {
         tag = 4;
         bytes = f;
     }
  /** Used during input serialization by ClassFile only. */
  CONSTANT_Float_info(ClassFile cf, DataInputStream in)
         throws IOException{
         super(cf, in);
         if (tag != 4)
             throw new ClassFormatError();
         bytes = in.readFloat();
     }
     /** Used during output serialization by ClassFile only. */
     public void serialize(DataOutputStream out)
         throws IOException{
         out.writeByte(4);
         out.writeFloat(bytes);
  }
  }
```
A19. **CONSTANT_Integer_info.java**
   Convience class for representing CONSTANT_Integer_info structures within ClassFiles.

   ```
 import java.lang.*;
 import java.io.*;
 /** Integer subtype of a constant pool entry. */
 public final class CONSTANT_Integer_info extends cp_info{
     /** The actual value. */
     public int bytes;
     public CONSTANT_Integer_info(int b) {
         tag = 3;
         bytes = b;
     }
     /** Used during input serialization by ClassFile only. */
     CONSTANT_Integer_info(ClassFile cf, DataInputStream in)
         throws IOException{
         super(cf, in);
         if (tag != 3)
             throw new ClassFormatError();
         bytes = in.readInt();
     }
     /** Used during output serialization by ClassFile only. */
     public void serialize(DataOutputStream out)
           throws IOException{
           out.writeByte(tag);
           out.writeInt(bytes);
     }
  }
```
A20. **CONSTANT_InterfaceMethodref_info.java**
   Convience class for representing CONSTANT_Interfacemethodref_info structures within ClassFiles.

   ```
 import java.lang.*;
 import java.io.*;
 /** InterfaceMethodref subtype of a constant pool entry.
 */
 public final class CONSTANT_InterfaceMethodref_info extends cp_info{
 /** The index to the class that this field is referencing to. */
 public int class_index;
 /** The name and type index this field if referencing to. */
 public int name_and_type_index;
 public CONSTANT_InterfaceMethodref_info(int class_index,
                                            int name_and_type_index) {
  tag = 11;
  this.class_index = class_index;
  this.name_and_type_index = name_and_type_index;
  }
  /** Used during input serialization by ClassFile only. */
  CONSTANT_InterfaceMethodref_info(ClassFile cf, DataInputStream in)
  throws IOException{
  super(cf, in);
  if (tag != 11)
       throw new ClassFormatError();
  class_index = in.readChar():
  name_and_type_index = in.readChar():
  }
  /** Used during output serialization by ClassFile only. *
  void serialize(DataOutputStream out)
  throws IOException{
  out.writeByte(tag):
  out.writeChar(class_index):
  out.writeChar(name_and_type_index);
  }
  }
```
A21. **CONSTANT_Long_info.java**
   Convience class for representing CONSTANT_Long_info structures within ClassFiles.

   ```
 import java.lang.*;
 import java.io.*;
 /** Long subtype of a constant pool entry. */
 public final class CONSTANT_Long_info extends cp_info{
 /** The actual value. */
 public long bytes;
 public CONSTANT_Long_info(long b) {
  tag =5;
  bytes = b;
  }
  /** Used during input serialization by ClassFile only. */
  CONSTANT_Long_info(ClassFile cf, DataInputStream in)
  throws IOException{
  super(cf, in);
  if (tag != 5)
       throw new ClassFormatError();
  bytes = in.readLong();
  }
  /** Used during output serialization by ClassFile only. */
  void serialize(DataOutputStream out)
  throws IOException{
   out.writeByte(tag);
   out.writeLong(bytes);
   }
   }
```
A22. **CONSTANT_Methodref_info.java**
   Convience class for representing CONSTANT_Methodref_info structures within ClassFiles.

   ```
 import java.lang.*;
 import java.io.*;
 /** Methodref subtype of a constant pool entry.
 */
 public final class CONSTANT_Methodref_info extends cp_info{
 /** The index to the class that this field is referencing to. */
 public int class_index;
 /** The name and type index this field if referencing to. */
 public int name_and_type_index;
 { public CONSTANT_ Methodref_info(int class_index, int name_and_type_index)
 {
  tag = 10;
  this.class_index = class_index;
  this.name_and_type_index = name_and_type_index;
  }
  /** Used during input serialization by ClassFile only. */
  CONSTANT_Methodref_info(ClassFile cf, DataInputStream in)
  throws IOException{
  super(cf, in);
  if (tag != 10)
       throw new ClassFormatError();
  class_index = in.readChar();
  name_and_type_index = in.readChar();
  }
  /** Used during output serialization by ClassFile only. */
  void serialize(DataOutputStream out)
  throws IOException{
  out.writeByte(tag);
  out.writeChar(class_index);
  out.writeChar(name_and_type_index);
  }
  }
```
A23. **CONSTANT_NameAndType_info.java**
   Convience class for representing CONSTANT_NameAndType_info structures within ClassFiles.

   ```
 import.java.io.*;
 import java.lang.*;
 /** NameAndType subtype of a constant pool entry.
 */
 public final class CONSTANT_NameAndType_info extends cp_info{
 /** The index to the Utf8 that contains the name. */
 public int name_index;
 /** The index fo the Utf8 that constains the signature. */
 public int descriptor_index;
 public CONSTANT_NameAndType_info(int name_index, int descriptor_index) {
   tag = 12;
   this.name_index = name_index;
   this.descriptor_index = descriptor_index;
   }
   /** Used during input serialization by ClassFile only. */
   CONSTANT_NameAndType_info(ClassFile cf, DataInputStream in)
   throws IOException{
   super(cf, in);
  if (tag != 12)
       throw new ClassFormatError();
   name_index = in.readChar();
  descriptor_index = in.readChar();
  }
  /** Used during output serialization by ClassFile only. */
  void serialize(DataOutputStream out)
   throws IOException{
  out.writeByte(tag);
  out.writeChar(name_index);
  out.writeChar(descriptor_index);
  }
  }
```
A24. **CONSTANT_String_info.java**
   Convience class for representing CONSTANT_String_info structures within ClassFiles.

   ```
 import java.lang.*;
 import java.io.*;
 /** String subtype of a constant pool entry.
 */
 public final class CONSTANT_String_info extends cp_info{
 /** The index to the actual value of the string. */
 public int string_index;
 public CONSTANT_String_info(int value) {
   tag = 8;
   string_index = value;
   }
   /** ONLY TO BE USED BY CLASSFILE! */
   public CONSTANT_String_info(ClassFile cf, DataInputStream in)
   throws IOException{
   super(cf, in);
   if (tag != 8)
       throw new ClassFormatError() ;
   string_index = in.readChar() ;
   }
   /** Output serialization, ONLY TO BE USED BY CLASSFILE! */
   public void serialize(DataOutputStream out)
   throws IOException{
   out.writeByte(tag) ;
   out.writeChar(string_index);
   }
   }
```
A25. **CONSTANT_Utf8_info.java**
   Convience class for representing CONSTANT_Utf8_info structures within ClassFiles.

   ```
 import java.io.*;
 import java.lang.*;
 /** Utf8 subtype of a constant pool entry.
 * We internally represent the Utf8 info byte array
 * as a String.
 */
 public final class CONSTANT_Utf8_info extends cp_info{
 /** Length of the byte array. */
 public int length;
 /** The actual bytes, represented by a String. */
 public String bytes;
 /** This constructor should be used for the purpose
 * of part creation. It does not set the parent
 * ClassFile reference.
 */
 public CONSTANT_Utf8_info(String s) {
  tag = 1;
  length = s.length();
  bytes = s;
  }
  /** Used during input serialization by ClassFile only. */
  public CONSTANT_Utf8_info(ClassFile cf, DataInputStream in)
  throws IOException{
  super(cf, in);
  if (tag != 1)
       throw new ClassFormatError();
  length = in.readChar();
  byte[] b = new byte[length];
  in.read(b, 0, length);
  // WARNING: String constructor is deprecated.
  bytes = new String(b, 0, length);
  }
  /** Used during output serialization by ClassFile only. */
  public void serialize(DataOutputStream out)
  throws IOException{
  out.writeByte(tag);
  out.writeChar(length);
  // WARNING: Handling of String coversion here might be problematic.
  out.writeBytes(bytes);
  }
  public String toString() {
  return bytes;
  }
  }
```
A26. **ConstantValue_attribute.java**
   Convience class for representing ConstantValue_attribute structures within ClassFiles.

   ```
 import java.lang.*;
 import java.io.*;
 
 /** Attribute that allows for initialization of static variables in
 * classes. This attribute will only reside in a field_info struct.
 */
 public final class ConstantValue_attribute extends attribute_info{
 public int constantvalue_index;
 public ConstantValue_attribute(ClassFile cf, int ani, int al, int cvi) {
  super(cf);
  attribute name index = ani;
  attribute_length = al;
  constantvalue_index = cvi;
  }
  public ConstantValue_attribute(ClassFile cf, DataInputStream in)
  throws IOException{
  super(cf, in);
  constantvalue_index = in.readChar();
  }
  public void serialize(DataOutputStream out)
  throws IOException{
  attribute_length = 2;
  super.serialize(out);
  out.writeChar(constantvalue_index);
  }
  }
```
A27. **cp_info.java**
   Convience class for representing cp_info structures within ClassFiles.

   ```
 import java.lang.*;
 import java.io.*;
 /** Represents the common interface of all constant pool parts
 * that all specific constant pool items must inherit from.
 *
 */
 public abstract class cp_info{
 /** The type tag that signifies what kind of constant pool
 * item it is */
 public int tag;
 /** Used for serialization of the object back into a bytestream. */
 abstract void serialize(DataOutputStream out) throws IOException;
 /** Default constructor. Simply does nothing. */
 public cp_info() {}
 /** Constructor simply takes in the ClassFile as a reference to
 * it's parent
 */
 public cp_info(ClassFile cf) {}
 /** Used during input serialization by ClassFile only. */
 cp_info(ClassFile cf, DataInputStream in)
  throws IOException{
  tag = in.readUnsignedByte();
  }
  }
```
A28. **Deprecated_attribute.java**
   Convience class for representing Deprecated_attribute structures within ClassFiles.

   ```
 import java.lang.*;
 import java.io.*;
 /** A fix attributed that can be located either in the ClassFile,
 * field_info or the method_info attribute. Mark deprecated to
 * indicate that the method, class or field has been superceded.
 */
 public final class Deprecated_attribute extends attribute_info{
 public Deprecated_attribute(ClassFile cf, int ani, int al) {
  super(cf);
  attribute_name_index = ani;
  attribute_length = al;
  }
  /** Used during input serialization by ClassFile only. */
  Deprecated_attribute(ClassFile cf, DataInputStream in)
  throws IOException{
  super(cf, in);
  }
  }
```
A29. **Exceptions_attribute.java**
   Convience class for representing Exceptions_attribute structures within ClassFiles.

   ```
import java.lang.*;
 import java.io.*;
 /** This is the struct where the exceptions table are located.
 * <br><br>
 * This attribute can only appear once in a method info struct.
 */
 public final class Exceptions_attribute extends attribute_info{
 public int number_of_exceptions;
 public int[] exception_index_table;
 public Exceptions_attribute(ClassFile cf, int ani, int al, int noe,
                              int[] eit) {
  super(cf);
  attribute_name_index = ani;
  attribute_length = al;
  number_of_exceptions = noe;
  exception_index_table = eit;
  }
  /** Used during input serialization by ClassFile only. */
  Exceptions_attribute(ClassFile cf, DataInputStream in)
  throws IOException{
  super(cf, in);
  number_of_exceptions = in.readChar();
  exception_index_table = new int[number_of_exceptions];
  for (int i=0; i<number_of_exceptions; i++)
       exception_index_table[i] = in.readChar();
       }
       /** Used during output serialization by ClassFile only. */
       public void serialize(DataOutputStream out)
  throws IOException{
  attribute_length = 2 + (number_of_exceptions*2);
  super.serialize(out);
  out.writeChar(number_of_exceptions);
  for (int i=0; i<number_of_exceptions; i++)
       out.writeChar(exception_index_table[i]);
       }
       }
```
A30. **field_info.java**
   Convience class for representing field_info structures within ClassFiles.

   ```
 import java.lang.*;
 import java.io.*;
 /** Represents the field_info structure as specified in the JVM
 specification.
 */
 public final class field_info{
 public int access_flags;
 public int name_index;
 public int descriptor_index;
 public int attributes_count;
 public attribute_info[] attributes;
 /** Convenience constructor. */
 public field_info(ClassFile cf, int flags, int ni, int di) {
  access_flags = flags;
  name_index = ni;
  descriptor_index = di;
  attributes_count = 0;
  attributes = new attribute_info[0];
  }
  /** Constructor called only during the serialization process.
  * <br><br>
  * This is intentionally left as package protected as we
  * should not normally call this constructor directly.
  * <br><br>
  * Warning: the handling of len is not correct (after String s =...)
  */
  field_info(ClassFile cf, DataInputStream in)
  throws IOException{
  access_flags = in.readChar();
  name_index = in.readChar();
  descriptor_index = in.readChar();
  attributes_count = in.readChar();
  attributes = new attribute_info[attributes_count];
   for (int i=0; i<attributes_count; i++) {
       in.mark(2);
       String s = cf.constant_pool[in.readChar()].toString();
       in.reset();
       if (s.equals("ConstantValue"))
            attributes[i] = new ConstantValue_attribute(cf, in);
       else if (s.equals("Synthetic"))
            attributes[i] = new Synthetic_attribute(cf, in);
       else if (s.equals("Deprecated"))
            attributes[i] = new Deprecated_attribute (cf, in);
       else
            attributes[i] = new attribute_info.Unknown (cf, in) ;
   }
   }
   /** To serialize the contents into the output format.
   */
   public void serialize(DataOutputStream out)
  throws IOException{
  out.writeChar(access_flags);
  out.writeChar(name_index);
  out.writeChar(descriptor_index);
  out.writeChar(attributes_count);
   for (int i=0; i<attributes_count; i++)
       attributes[i].serialize(out);
       }
       }
```
A31. **InnerClasses_attribute.java**
   Convience class for representing InnerClasses_attribute structures within ClassFiles.

   ```
 import java.lang.*;
 import java.io.*;
 /** A variable length structure that contains information about an
 * inner class of this class.
 */
 public final class InnerClasses_attribute extends attribute info{
 public int number_of_classes;
 public classes[] classes;
 public final static class classes{
  int inner_class_info_index;
  int outer_class_info_index;
  int inner_name_index;
  int inner_class_access_flags;
  }
  public InnerClasses_attribute(ClassFile cf, int ani, int al,
                                int noc, classes[] c) {
  super(cf);
  attribute_name_index = ani;
  attribute_length = al;
  number_of_classes = noc;
  classes = c;
  }
  /** Used during input serialization by ClassEile only. */
  InnerClasses_attribute(ClassFile cf, DataInputStream in)
  throws IOExceptiont
  super(cf, in);
  number_of_classes = in.readChar();
  classes = new InnerClasses_attribute.classes[number_of_classes];
   for (int i=0; i<number_of_classes; i++){
       classes[i] = new classes();
       classes[i]inner_class_info_index = in.readChar():
       classes[i].outer_class info_index = in.readChar();
       classes[i].inner_name_index = in.readChar():
       classes[i].inner_class_access_flags = in.readChar();
   }
   }
   /** Used during output serialization by ClassFile only. */
   public void serialize(DataOutputStream out)
  throws IOExceptionf
  attribute_length = 2 + (number_of_classes * 8);
  super.serialize(out);
  out.writeChar(number_of_classes);
   for (int i=0; i<number_of_classes; i++){
       out.writeChar(classes[i].inner class info_index);
       out.writeChar(classes[i].outer_class_info_index);
       out.writeChar(classes[i].inner_name_index);
       out.writeChar(classes[i].inner class access flags);
   }
   }
   }
```
A32. **LineNumberTable_attribute.java**
   Convience class for representing LineNumberTable_attribute structures within ClassFiles.

   ```
 import java.lang.*;
 import java.io.*;
 /** Determines which line of the binary code relates to the
 * corresponding source code.
 */
 public final class LineNumberTable_attribute extends attribute_info{
 public int line_number_table_length;
 public line_number_table[] line_number_table;
 public final static class line_number_table{
   int start_pc;
   int line_number;
   }
   public LineNumberTable_attribute(ClassFile cf, int ani, int al, int
   lntl,
                                    line_number_table[] lnt) {
   super(cf);
   attribute_name_index = ani;
   attribute_length = al;
   line_number_table_length = lntl;
   line_number_table = lnt;
   }
   /** Used during input serialization by ClassFile only. */
   LineNumberTable_attribute(ClassFile cf, DataInputStream in)
   throws IOException{
   super(cf, in);
   line number_table_length = in.readCharO;
   line_number_table = new
   LineNumberTable_attribute.line_number_table[line_number_table_length];
   for (int i=0; i<line_number_table_length; i++){
       line_number_table[i] = new line_number_table();
       line_number_table[i].start_pc = in.readChar();
       line_number_table[i].line_number = in.readChar();
   }
   }
   /** Used during output serialization by ClassFile only. */
   void serialize(DataOutputStream out)
   throws IOException{
   attribute_length = 2 + (line_number_table_length * 4);
   super.serialize(out);
   out.writeChar(line_number_table_length);
   for (int i=0; i<line_number_table_length; i++){
       out.writeChar(line_number_table[i].start pc);
       out.writeChar(line_number_table[i].line_number);
   }
   }
   }
```
A33. **LocalVariableTable_attribute.java**
   Convience class for representing LocalVariableTable_attribute structures within ClassFiles.

   ```
import java.lang. *;
 import java.io. *;
 /** Used by debugger to find out how the source file line number is linked
 * to the binary code. It has many to one correspondence and is found in
 * the Code_attribute.
 */
 public final class LocalVariableTable_attribute extends attribute_info{
 public int local_variable_table_length;
 public local_variable_table[] local_variable_table;
 public final static class local_variable_table{
  int start_pc;
  int length;
  int name_index;
  int descriptor_index;
  int index;
  }
  public LocalVariableTable_attribute(ClassFile cf, int ani, int al,
                                       int lvtl, local_variable_table[]
                                       lvt){
  super(cf);
  attribute_name_index = ani;
  attribute_length = al;
  local_variable_table_length = lvtl;
  local_variable_table = lvt;
  }
  /** Used during input serialization by ClassFile only. */
  LocalVariableTable attribute(ClassFile cf, DataInputStream in)
  throws IOException{
  super(cf, in);
  local_variable_table_length = in.readChar();
  local_variable_table = new
  LocalVariableTable_attribute.local_variable_table[local_variable_table_lengt
  h];
  for (int i=0; i<local_variable_table_length; i++){
       local_variable_table[i] = new local_variable_table();
       local_variable_table[i].start_pc = in.readChar();
       local_variable_table[i].length = in.readChar();
       local_variable_table[i].name_index = in.readChar();
       local_variable_table[i].descriptor_index = in.readChar():
       local_variable_table[i].index = in.readChar();
  }
  }
  /** Used during output serialization by ClassFile only. */
  void serialize(DataOutputStream out)
  throws IOException{
  attribute_length = 2 + (local_variable_table_length * 10);
  super.serialize(out);
  out.writeChar(local_variable_table_length);
  for (int i=0; i<local_variable_table_length: i++){
       out.writeChar(local_variable_table[i].start pc);
       out.writeChar(local_variable_table[i].length);
       out.writeChar(local_variable_table[i].name_index);
       out.writeChar(local_variable_table[i].descriptor index);
       out.writeChar(local_variable_table[i].index);
  }
  }
  }
```
A34. **method_info.java**
   Convience class for representing method_info structures within ClassFiles.

   ```
import java.lang. *;
 import java.io. *;
 /** This follows the method_info in the JVM specification.
  */
 public final class method_info {
   public int access_flags;
   public int name_index;
   public int descriptor_index:
   public int attributes_count;
   public attribute_info[] attributes;
   /** Constructor. Creates a method_info, initializes it with
    * the flags set, and the name and descriptor indexes given.
    * A new uninitialized code attribute is also created, and stored
    * in the <i>code</i> variable.*/
   public method_info(ClassFile cf, int flags, int ni, int di,
int ac, attribute_info[] a) {
     access_flags = flags;
     name_index = ni;
     descriptor_index = di;
     attributes_count = ac;
     attributes = a;
   }
   /** This method creates a method_info from the current pointer in the
    * data stream. Only called by during the serialization of a complete
    * ClassFile from a bytestream, not normally invoked directly.
    */
   method_info(ClassFile cf, DataInputStream in)
     throws IOException{
     access_flags = in.readChar();
     name_index = in.readChar();
     descriptor_index = in.readChar();
     attributes_count = in.readChar();
     attributes = new attribute_info[attributes_count];
     for (int i=0; i<attributes_count; i++){
      in.mark(2);
      String s = cf.constant_pool[in.readChar()].toString();
      in.reset();
      if (s.equals("Code"))
       attributes[i] = new Code_attribute(cf, in);
      else if (s.equals("Ex.ceptions"))
       attributes[i] = new Exceptions_attribute(cf, in);
       else if (s.equals("Synthetic"))
       attributes[i] = new Synthetic_attribute(cf, in);
      else if (s.equals("Deprecated"))
       attributes[i] = new Deprecated_attribute(cf, in);
      else
       attributes[i] = new attribute_info.Unknown(cf, in);
     }
 }.
 /** Output serialization of the method_info to a byte array.
  * Not normally invoked directly.
 */
 public void serialize(DataOutputStream out)
   throws IOException{    out.writeChar(access_flags);
   out.writechar(name index);
   out.writeChar(descriptor_index):
   out.writechar(attributes_count);
   for (int i=0; i<attributes_count; i++)
      attributes[i].serialize(out);
     }
 }
```
A35. SourceFile_attribute.java
   Convience class for representing SourceFile_attnbute structures within ClassFiles.

   ```
 import java.lang.*;
 import java.io.*;
 /** A SourceFile attribute is an optional fixed_length attribute in
 * the attributes table. Only located in the ClassFile struct only
 * once.
 */
 public final class SourceFile_attribute extends attribute_info{
 public int sourcefile_index;
 public SourceFile_attribute(ClassFile cf, int ani, int al, int sfi){
  super(cf);
  attribute name_index = ani;
  attribute_length = al;
  sourcefile_index = sfi;
  }
  /** Used during input serialization by ClassFile only. */
  SourceFile_attribute(ClassFile cf, DataInputStream in)
  throws IOException{
  super(cf, in);
  sourcefile_index = in.readChar();
  }
  /** Used during output serialization by ClassFile only. */
  void serialize(DataOutputStream out)
  throws IOException{
  attribute_length = 2;
  super.serialize(out);
  out.writeChar(sourcefile-index);
  }
  }
```
A36. **Synthetic_attribute.java**
   Convience class for representing Synthetic_attribute structures within ClassFiles.

   ```
import java.lang.*;
 import java.io.*;
 /** A synthetic attribute indicates that this class does not have
 * a generated code source. It is likely to imply that the code
 * is generated by machine means rather than coded directly. This
 * attribute can appear in the classfile, method_info or field_info.
 * It is fixed length.
 */
 public final class Synthetic_attribute extends attribute_info{
 public Synthetic_attribute(ClassFile cf, int ani, int al){
  super(cf);
  attribute_name_index = ani;
  attribute_length = al;
  }
  /** Used during output serialization by ClassFile only. */
  Synthetic_attribute(ClassFile cf, DataInputStream in)
  throws IOException{
  super(cf, in);
  }
  }
```

## Claims

1. A method of executing individual threads of an application program (50) at the same time on a plurality of computers all interconnected via a communications link (53, 314), wherein said application program (50) is an application program written to operate only on a single computer, said method comprising the following steps of:
(i) creating, in a local memory of each said computer, similar memory locations, the local memory of each said computer being accessible only by those individual threads of said application program (50) executing on that computer, and configuring each said computer to read memory locations only from its corresponding local memory and no other computer,
(ii) loading the individual threads of the application program on said computers,
(iii) identifying before loading, or during loading, or after loading but before execution, executable actions which write to memory,
(iv) modifying the application program to distribute the content of any written to memory location that is to be updated by one of said computers in carrying out an identified executable writing action,
(v) sharing (108,310) execution of said individual threads of the application program between said computers (JVM#I, JVM#2 ..JVM#n; 101, 102), and
(vi) distributing the content of any written to memory location that is updated by one of said computers in carrying out an identified executable writing action, to other ones of said computers via said communications link (53, 314).

2. The method as claimed in claim 1 **characterised by** the further step of:
(vii) for each said local memory allocating a substantially equal local memory capacity to each said thread of said application program (50) whilst ensuring that the total memory capacity available to said application program is substantially a single said allocated memory capacity and not substantially the total of said allocated memory capacities.

3. The method as claimed in claim 1 or 2 **characterised by** the further step of:
(viii) distributing said updated memory location content at a data transfer rate which is substantially less than the rate at which said local memory is read.

4. The method as claimed in any one of claims 1 - 3 **characterised by** the further step of:
(ix) allocating a substantially similar name to each of said substantially similar memory locations.

5. The method as claimed in any one of claims 1-3 **characterised by** the further step of:
(x) modifying said application program utilising a procedure selected from the group of procedures consisting of re-compilation at loading, pre-compilation prior to loading, compilation prior to loading, just-in-time compilation, and re-compilation after loading and before execution of the relevant portion of said application program.

6. The method as claimed in claim 5 **characterised by** the further step of:
(xi) transferring the modified application program to all said computers utilizing a procedure selected from the group consisting of master / slave transfer, branched transfer and cascaded transfer.

7. The method as claimed in any one of claims 1-6 **characterised by** the further step of:
(xii) modifying said application program differently for different computers.

8. The method as claimed in any one of claims 1-7 wherein said modifying of said application program comprises the further steps of:
(xiii) detecting instructions which share memory records utilizing one of said computers,
(xiv) listing all such shared memory records and providing a naming tag for each listed memory record,
(xv) detecting those instructions which write to, or manipulate the contents of, any of said listed memory records, and
(xvi) generating an updating propagation routine corresponding to each said detected write or manipulate instruction, said updating propagation routine forwarding the re-written or manipulated contents and name tag of each said re-written or manipulated listed memory record to all of the others of said computers.

9. A multiple computer system having a plurality of computers all interconnected via a communications link (53, 314) on which individual threads of an application program (50) are executed at the same time, wherein
(i) said application program (50) is an application program written to operate only on a single computer,
(ii) each of said computers (JVM#I, JVM#2 ...JVM#n; 101, 102) has a local memory in each of which similar memory location are created, the local memory of each said computer is accessible only by those individual threads of said application program (50) executing on that computer, and each said computer is configured to read memory locations only from its corresponding local memory and from no other computer,
(iii) the individual threads of the application program are loaded on said computers,
(iv) executable actions of said application program which write to memory, are identified before loading, or during loading, or after loading but before execution,
(v) the program is modified to distribute the content of any written to memory location that is to be updated by one of said computers in carrying out an identified executable writing action,
(vi) execution of said individual threads of the application program is shared (108,310) between said computers (JVM#I, JVM#2 ...JVM#n; 101, 102), and
(vii) the content of any written to memory location that is updated by one of said computers in carrying out an identified executable writing action, is distributed to other ones of said computers via said communications link (53, 314).

10. The multiple computer system as claimed in claim 9 **characterised in that** the local memory capacity allocated to said application program (50) on each said computer is substantially equal, and the total memory capacity available to said application program on all said computers is substantially a single said allocated memory capacity and not substantially the total of said allocated memory capacities.

11. The multiple computer system as claimed in claims 9 or 10 **characterised in that** distribution of the content of said written to memory location is to all said computers and communicated via said communications network (53, 314) at a data transfer rate which is less than the rate at which said local memory is read.

12. The multiple computer system as claimed in any one of claims 9 to 11 **characterised in that** each said plurality of substantially similar memory locations has a substantially similar name.

13. The multiple computer system as claimed in any one of claims 9 to 12 **characterised in that** at least some of said computers are manufactured by different manufacturers and / or have different operating systems.

14. A computer program product comprising a set of program instructions stored in a storage medium and **characterised in that** said program instructions are operable to permit a plurality of computers to carry out the method as claimed in any one of claims 1 to 8.

## Patentansprüche

1. Verfahren zum gleichzeitigen Ausführen individueller Threads eines Anwendungsprogramms (50) auf mehreren Computern, die alle über eine Kommunikationsverbindung (53, 314) verbunden sind, wobei das Anwendungsprogramm (50) ein zum Betreiben lediglich eines einzigen Computers geschriebenes Anwendungsprogramm ist, wobei das Verfahren die nachfolgenden Schritte umfasst:
(i) Erzeugen ähnlicher Speicherstellen in einem lokalen Speicher jedes der Computer, wobei der lokale Speicher jedes Computers nur durch die individuellen Threads des Anwendungsprogramms (50) zugänglich ist, die auf dem Computer laufen, und Einrichten jedes Computers, um Speicherstellen nur von seinem entsprechenden lokalen Speicher und keinem anderem Computer zu lesen,
(ii) Laden der individuellen Threads des Anwendungsprogramms auf die Computer,
(iii) Identifizieren vor dem Laden, oder während des Ladens, oder nach dem Laden, jedoch vor dem Ausführen ausführbarer Handlungen, die auf Speicher schreiben,
(iv) Modifizieren des Anwendungsprogramms, um den Inhalt von allem Geschriebenen auf eine Speicherstelle, die durch einen der Computer beim Ausführen einer identifizierten ausführbaren Schreibhandlung zu aktualisieren ist, zu verteilen,
(v) Teilen (108, 310) der Ausführung der individuellen Threads des Anwendungsprogramms zwischen den Computern (JVM#1, JVM#2 ... JVM#n; 101, 102), und
(vi) Verteilen des Inhalts von allem Geschriebenen auf eine Speicherstelle, die durch einen der Computer beim Ausführen einer identifizierten ausführbaren Schreibhandlung aktualisiert wird, über die Kommunikationsverbindung (53, 314) an die anderen Computer.

2. Verfahren nach Anspruch 1, **gekennzeichnet durch** den weiteren Schritt:
(vii) Zuweisen einer im Wesentlichen gleichen lokalen Speicherkapazität an jeden Thread des Anwendungsprogramms (50) für jeden der lokalen Speicher, während sichergestellt wird, dass die für das Anwendungsprogramm verfügbare Gesamtspeicherkapazität im Wesentlichen genau eine zugewiesene Speicherkapazität und nicht im Wesentlichen die Gesamtheit der zugewiesenen Speicherkapazitäten ist.

3. Verfahren nach Anspruch 1 oder 2, **gekennzeichnet durch** den weiteren Schritt:
(viii) Verteilen des aktualisierten Speicherstelleninhalts mit einer Datenübertragungsrate, die im Wesentlichen geringer ist als die Rate, mit der der lokale Speicher gelesen wird.

4. Verfahren nach einem der Ansprüche 1 bis 3, **gekennzeichnet durch** den weiteren Schritt:
(ix) Zuweisen eines im Wesentlichen ähnlichen Namens an jede der im Wesentlichen ähnlichen Speicherstellen.

5. Verfahren nach einem der Ansprüche 1 bis 3, **gekennzeichnet durch** den weiteren Schritt:
(x) Modifizieren des Anwendungsprogramms unter Verwendung einer Prozedur, die aus Neu-Kompilieren beim Laden, Vor-Kompilieren vor dem Laden, Kompilieren vor dem Laden, Just-in-Time-Kompilieren und Neu-Kompilieren nach dem Laden und vor dem Ausführen des relevanten Abschnitts des Anwendungsprogramms ausgewählt ist.

6. Verfahren nach Anspruch 5, **gekennzeichnet durch** den weiteren Schritt:
(xi) Übertragen des modifizierten Anwendungsprogramms an alle Computer unter Verwendung einer Prozedur, die aus Master/Slave-Übertragung, verzweigte Übertragung und/oder kaskadierte Übertragung ausgewählt ist.

7. Verfahren nach einem der Ansprüche 1 bis 6, **gekennzeichnet durch** den weiteren Schritt:
(xii) unterschiedliches Modifizieren des Anwendungsprogramms für verschiedene Computer.

8. Verfahren nach einem der Ansprüche 1 bis 7, wobei das Modifizieren des Anwendungsprogramms den weiteren Schritt umfasst:
(xiii) Erfassen von Instruktionen, die Speicheraufzeichnungen teilen unter Verwendung eines der Computer,
(xiv) Auflisten aller solcher geteilten Speichereinträge und Bereitstellen eines Bezeichnungsetiketts für jeden aufgelisteten Speichereintrag,
(xv) Erfassen solcher Instruktionen, die auf die aufgelisteten Speichereinträge schreiben, oder deren Inhalte manipulieren, und
(xvi) Erzeugen einer Aktualisierungsverbreitungsroutine entsprechend jeder der erfassten Schreibe- oder Manipulieranweisungen, wobei die Aktualisierungsverbreitungsroutine die neu geschriebenen oder manipulierten Inhalte und Bezeichnungsetikette jedes neu geschriebenen oder manipulierten aufgelisteten Speichereintrags an alle anderen Computer weiterleitet.

9. Mehrcomputersystem mit mehreren Computern, die alle über eine Kommunikationsverbindung (53, 314) verbunden sind und auf denen individuelle Threads eines Anwendungsprogramms (50) gleichzeitig ausgeführt werden, wobei
(i) das Anwendungsprogramm (50) ein lediglich für den Betrieb eines einzigen Computers geschriebenes Anwendungsprogramm ist,
(ii) jeder der Computer (JVM#1, JVM#2 ... JVM#n; 101, 102) einen lokalen Speicher aufweist, in denen jeweils ähnliche Speicherstellen erzeugt werden, wobei der lokale Speicher jedes Computers nur durch die individuellen Threads des Anwendungsprogramms (50) zugänglich ist, die auf dem Computer laufen, und jeder Computer dazu konfiguriert ist, Speicherstellen nur von seinem entsprechenden lokalen Speicher und von keinem anderen Computer zu lesen,
(iii) die individuellen Threads des Anwendungsprogramms auf die Computer geladen werden,
(iv) ausführbare Handlungen des Anwendungsprogramms, die auf Speicher schreiben, vor dem Laden, oder während des Ladens, oder nach dem Laden, jedoch vor der Ausführung identifiziert werden,
(v) das Programm modifiziert ist, um den Inhalt von allem Geschriebenen auf eine Speicherstelle, die durch einen der Computer beim Ausführen einer identifizierten ausführbaren Schreibhandlung aktualisiert wird, zu verteilen,
(vi) ein Ausführen der individuellen Threads des Anwendungsprogramms zwischen den Computern (JVM#1, JVM#2 ... JVM#n; 101, 102) aufgeteilt ist (108, 310), und
(vii) der Inhalt von allem Geschriebenen auf eine Speicherstelle, die durch einen der Computer beim Ausführen einer identifizierten ausführbaren Schreibhandlung aktualisiert wird, über die Kommunikationsverbindung (53, 314) an die anderen Computer verteilt wird.

10. Mehrcomputersystem nach Anspruch 9, **dadurch gekennzeichnet, dass** die lokale Speicherkapazität, die dem Anwendungsprogramm (50) auf jedem Computer zugewiesen ist, im Wesentlichen gleich ist und die für das Anwendungsprogramm verfügbare Gesamtspeicherkapazität auf allen Computern im Wesentlichen genau eine zugewiesene Speicherkapazität und nicht im Wesentlichen die Gesamtheit der zugewiesenen Speicherkapazitäten ist.

11. Mehrcomputersystem nach Ansprüchen 9 oder 10, **dadurch gekennzeichnet, dass** eine Verteilung des Inhalts des auf eine Speicherstelle Geschriebenen eine Verteilung an alle Computer ist und über das Kommunikationsnetzwerk (53, 314) mit einer Datenübertragungsrate übertragen wird, die geringer ist als die Rate, mit der der lokale Speicher gelesen wird.

12. Mehrcomputersystem nach einem der Ansprüche 9 bis 11, **dadurch gekennzeichnet, dass** jede der mehreren im Wesentlichen ähnlichen Speicherstellen einen im Wesentlichen ähnlichen Namen aufweist.

13. Mehrcomputersystem nach einem der Ansprüche 9 bis 12, **dadurch gekennzeichnet, dass** mindestens einige der Computer durch verschiedene Hersteller hergestellt sind und/oder verschiedene Betriebssysteme aufweisen.

14. Computerprogrammprodukt aufweisend einen Satz von Programmanweisungen, die in einem Speichermedium gespeichert sind, **dadurch gekennzeichnet, dass** die Programmanweisungen anwendbar sind, um mehreren Computern zu ermöglichen, das Verfahren nach einem der Ansprüche 1 bis 8 auszuführen.

## Revendications

1. Procédé d'exécution de fils individuels d'un programme d'application (50) au même moment, sur une pluralité d'ordinateurs tous interconnectés via une liaison de communications (53, 314), dans lequel ledit programme d'application (50) est un programme d'application écrit pour ne fonctionner que sur un seul ordinateur, ledit procédé comprenant les étapes suivantes qui consistent à :
(i) créer, dans une mémoire locale de chacun desdits ordinateurs, des emplacements de mémoire similaires, la mémoire locale de chacun desdits ordinateurs n'étant accessible que par les fils individuels dudit programme d'application (50) s'exécutant sur cet ordinateur, et configurer chacun desdits ordinateurs pour ne lire des emplacements de mémoire qu'à partir de sa mémoire locale correspondante et d'aucun autre ordinateur,
(ii) charger les fils individuels du programme d'application sur lesdits ordinateurs,
(iii) identifier avant le chargement, ou pendant le chargement, ou après le chargement mais avant l'exécution, les actions exécutables qui écrivent dans la mémoire,
(iv) modifier le programme d'application pour distribuer le contenu d'un emplacement quelconque d'écriture en mémoire qui doit être mis à jour par l'un desdits ordinateurs en mettant en oeuvre une action d'écriture exécutable identifiée,
(v) partager (108, 310) l'exécution desdits fils individuels du programme d'application entre lesdits ordinateurs (JVM#1, JVM#2... JVM#n ; 101, 102), et
(vi) distribuer le contenu d'un emplacement quelconque d'écriture en mémoire qui est mis à jour par l'un desdits ordinateurs dans la mise en oeuvre d'une action d'écriture exécutable identifiée, à d'autres ordinateurs desdits ordinateurs via ladite liaison de communications (53, 314).

2. Procédé tel que revendiqué dans la revendication 1, **caractérisé par** l'étape supplémentaire qui consiste à :
(vii) allouer, pour chacune desdites mémoires locales, une capacité de la mémoire locale essentiellement égale à chacun desdits fils dudit programme d'application (50) tout en s'assurant que la capacité de la mémoire totale disponible audit programme d'application soit essentiellement une seule dite capacité allouée de la mémoire et non essentiellement le total desdites capacités allouées de la mémoire.

3. Procédé tel que revendiqué dans la revendication 1 ou 2, **caractérisé par** l'étape supplémentaire qui consiste à :
(viii) distribuer ledit contenu de l'emplacement de mémoire mis à jour à un débit de transfert de données qui est essentiellement inférieur au débit auquel ladite mémoire locale est lue.

4. Procédé tel que revendiqué dans l'une quelconque des revendications 1-3, **caractérisé par** l'étape supplémentaire qui consiste à :
(ix) allouer un nom essentiellement similaire à chacun desdits emplacements de mémoire essentiellement similaires.

5. Procédé tel que revendiqué dans l'une quelconque des revendications 1-3, **caractérisé par** l'étape supplémentaire qui consiste à :
(x) modifier ledit programme d'application en utilisant une procédure choisie dans le groupe de procédures constituées d'une recompilation au chargement, d'une pré-compilation avant le chargement, d'une compilation avant le chargement, d'une compilation juste-à-temps, et d'une recompilation après le chargement et avant l'exécution de la partie appropriée dudit programme d'application.

6. Procédé tel que revendiqué dans la revendication 5, **caractérisé par** l'étape supplémentaire qui consiste à :
(xi) transférer le programme d'application modifié à tous lesdits ordinateurs en utilisant une procédure choisie dans le groupe constitué de transfert maître/esclave, de transfert ramifié et de transfert en cascade.

7. Procédé tel que revendiqué dans l'une quelconque des revendications 1-6, **caractérisé par** l'étape supplémentaire qui consiste à :
(xii) modifier ledit programme d'application différemment pour des ordinateurs différents.

8. Procédé tel que revendiqué dans l'une quelconque des revendications 1-7, dans lequel ladite modification dudit programme d'application comprend les étapes supplémentaires qui consistent à :
(xiii) détecter des instructions qui partagent des enregistrements de mémoire en utilisant l'un desdits ordinateurs,
(xiv) énumérer tous ces enregistrements de mémoire partagés et fournir une étiquette d'appellation pour chaque enregistrement de mémoire énuméré,
(xv) détecter ces instructions qui écrivent dans l'un desdits enregistrements de mémoire énumérés ou manipulent les contenus de l'un desdits enregistrements de mémoire énumérés, et
(xvi) générer un sous-programme de propagation de mise à jour correspondant à chacune desdites instructions d'écriture ou de manipulation détectées, ledit sous-programme de propagation de mise à jour transmettant les contenus réécrits ou manipulés et l'étiquette d'appellation de chacun desdits enregistrements de mémoire énumérés réécrits ou manipulés à l'ensemble des autres desdits ordinateurs.

9. Système informatique multiple ayant une pluralité d'ordinateurs tous interconnectés via une liaison de communications (53, 314) sur lesquels des fils individuels d'un programme d'application (50) sont exécutés au même moment, dans lequel
(i) ledit programme d'application (50) est un programme d'application écrit pour ne fonctionner que sur un seul ordinateur,
(ii) chacun desdits ordinateurs (JVM#1, JVM#2... JVM#n ; 101, 102) possède une mémoire locale dans chacun desquels des emplacements de mémoire similaire sont créés, la mémoire locale de chacun desdits ordinateurs n'est accessible que par les fils individuels dudit programme d'application (50) s'exécutant sur cet ordinateur, et chacun desdits ordinateurs est configuré pour ne lire des emplacements de mémoire qu'à partir de sa mémoire locale correspondante et d'aucun autre ordinateur,
(iii) les fils individuels du programme d'application sont chargés sur lesdits ordinateurs,
(iv) des actions exécutables par ledit programme d'application qui écrivent dans la mémoire, sont identifiées avant le chargement, ou pendant le chargement, ou après le chargement mais avant l'exécution,
(v) le programme est modifié pour distribuer le contenu d'un emplacement quelconque d'écriture en mémoire qui doit être mis à jour par l'un desdits ordinateurs en mettant en oeuvre une action d'écriture exécutable identifiée,
(vi) l'exécution desdits fils individuels du programme d'application est partagée (108, 310) entre lesdits ordinateurs (JVM#1, JVM#2... JVM#n ; 101, 102), et
(vii) le contenu d'un emplacement quelconque d'écriture en mémoire qui est mis à jour par l'un desdits ordinateurs dans la mise à jour d'une action d'écriture exécutable identifiée, est distribué à d'autres ordinateurs desdits ordinateurs via la liaison de communications (53, 319).

10. Système informatique multiple tel que revendiqué dans la revendication 9, **caractérisé en ce que** la capacité de la mémoire locale allouée audit programme d'application (50) sur chacun desdits ordinateurs est essentiellement égale, et la capacité de la mémoire totale disponible audit programme d'application sur tous lesdits ordinateurs est essentiellement une seule dite capacité allouée de la mémoire et non essentiellement le total desdites capacités allouées de la mémoire.

11. Système informatique multiple tel que revendiqué dans les revendications 9 ou 10, **caractérisé en ce que** la distribution du contenu dudit emplacement écrit à emplacement de mémoire est effectuée sur tous lesdits ordinateurs et communiquée via ledit réseau de communications (53, 314) à un débit de transfert de données qui est inférieur au débit auquel ladite mémoire locale est lue.

12. Système informatique multiple tel que revendiqué dans l'une quelconque des revendications 9 à 11 **caractérisé en ce que** chacun de ladite pluralité d'emplacements de mémoire essentiellement similaires a un nom essentiellement similaire.

13. Système informatique multiple tel que revendiqué dans l'une quelconque des revendications 9 à 12 **caractérisé en ce qu'**au moins certains desdits ordinateurs sont fabriqués par des fabricants différents et/ou des systèmes d'exploitation différents.

14. Produit de programme informatique comprenant un ensemble d'instructions de programme stockées dans un support de stockage et **caractérisé en ce que** lesdites instructions de programme peuvent être mise en oeuvre pour permettre à une pluralité d'ordinateurs de réaliser le procédé tel que revendiqué dans l'une quelconque des revendications 1 à 8.
